# EUROPÄISCHE PATENTSCHRIFT

(11) **EP 2 352 938 B1**
(45) Veröffentlichungstag und Bekanntmachung des Hinweises auf die Patenterteilung: **26.09.2012**
(21) Anmeldenummer: 09764714.3
(22) Anmeldetag: 18.11.2009
(51) Int. Cl.: F16K 1/226, F16K 27/02

(54) **SCHEIBENVENTIL MIT LECKAGESICHERUNG**
DISK VALVE WITH LEAK PREVENTION
SOUPAPE À DISQUE AVEC PROTECTION CONTRE LES FUITES

(30) Priorität: 02.12.2008 DE 102008060065
(43) Veröffentlichungstag der Anmeldung: 10.08.2011
(73) Patentinhaber: GEA Tuchenhagen GmbH, 21514 Büchen (DE)
(72) Erfinder: SAUER, Martin, 86687 Kaisheim (DE); SCHMID, Werner, 89522 Heidenheim (DE); WIEDENMANN, Willi, 73469 Riesbürg (DE); WENGERT, Holger, 73441 Bopfingen (DE); SCHOLZ, Gundar, 21465 Reinbek (DE); PAWLIK, Markus, 21514 Büchen (DE)
(74) Vertreter: Hauck Patent- und Rechtsanwälte
(86) Internationale Anmeldenummer: PCT/EP2009/008192
(87) Internationale Veröffentlichungsnummer: WO 2010/063374

(56) Entgegenhaltungen:
- EP-A1- 0 822 358
- DE-A1- 2 901 207
- DE-U1-202006 012 553
- GB-A- 1 015 453
- US-A- 3 367 625
- US-A- 4 292 992

## Beschreibung

Die Erfindung betrifft ein Scheibenventil mit Leckagesicherung mit einem entlang einer Trennfläche geteilten Ventilgehäuse, das einen ersten Ventilgehäuseteil mit einer ersten Durchtrittsöffnung und einen zweiten Ventilgehäuseteil mit einer zweiten Durchtrittsöffnung aufweist. Ein scheibenförmiges Schließglied zum Schließen und Öffnen der Durchtrittsöffnungen, welches um eine in dem Ventilgehäuse verlaufende Drehachse drehbar ist und zu diesem Zweck zwei im Ventilgehäuse drehbar gelagerte Lagerzapfen hat, arbeitet mit einer auf der Innenseite eines Dichtrings angeordneten Ventilsitzfläche zusammen. Dieser Dichtring dichtet außerdem die Trennfläche ab, wozu er zwischen den Ventilgehäuseteilen eingespannt ist, und er besitzt zwei diametral gegenüberliegende Lagerzapfen-Bohrungen, in denen die Lagerzapfen dichtend Aufnahme finden. Das Schließglied weist eine an seinem Umfang angeordnete, zum Dichtring offenen Ringnut auf, die im Bereich des ersten Lagerzapfens eine fluiddichte Trennung erfährt. Die Ringnut ist an der Trennstelle mit ihrem jeweiligen Ende jeweils mit einer Zapfenlängsbohrung fluidgängig verbunden, wobei die Zapfenlängsbohrungen, getrennt voneinander, in dem ersten Lagerzapfen verlaufen, unterhalb des Dichtrings jeweils aus der Mantelfläche des ersten Lagerzapfens seitlich austreten, dort, in der Schließstellung des Schließglieds, sich jeweils in einer Verbindungsbohrung einer die Mantelfläche dichtend umschließenden ringförmigen Schaltdichtung fluidgängig fortsetzen und anschließend jeweils mit einem Kanal fluidgängig verbunden sind. Die Kanäle münden, getrennt voneinander, in die Umgebung des Ventilgehäuses aus.

Scheibenventile dieser Art sind nicht nur in ihrer Schließstellung durch die Ringnut im scheibenförmigen Schließglied leckagegesichert, da diese zwei voneinander beabstandete, umlaufende Abdichtungsstellen schafft, zwischen denen ein einerseits von der Ringnut und andererseits von dem Dichtring begrenzter Leckagehohlraum gebildet ist. Dieser Leckagehohlraum ist darüber hinaus auch im Durchfluss spül und reinigbar, sofern er über seinen von den Anschlussstellen mit den beiden Zapfenlängsbohrungen wegführenden Umfang fluidgängig ausgebildet ist.

### STAND DER TECHNIK

Ein Scheibenventil mit Leckagesicherung der gattungsgemäßen Art, das mit einem einfachen und preiswerten Dichtring auskommt, ist aus der DE 20 2006 012 553 U1 bekannt. Bei diesem Scheibenventil zweigt von jedem der beiden Leckagekanäle, die in dem unteren Zapfen des Schließglieds verlaufen, seitlich eine Zweigleitung ab, welche zu einer Anschlussmöglichkeit für eine Spülflüssigkeit und für eine Ableitung von verbrauchter Spülflüssigkeit führen. Die Längsachsen der Leckagekanäle verlaufen in der durch die Drehachse des Schließglieds hindurchgehenden Meridianebene des scheibenförmigen Schließglieds, so dass auch die beiden abzweigenden Zweigleitungen in dieser Ebene aus der Mantelfläche des unteren Zapfens austreten. Da nur in der Schließstellung des Schließglieds die Leckagesicherung wirksam und die vorstehend erwähnte Spülung der Leckagekanäle und der mit diesen verbundene Ringnut am Umfang des Schließglied möglich ist, besteht in dieser Stellung des Scheibenventils eine fluidgängige Verbindung zwischen der Ringnut und den an das Ventilgehäuse aus der Umgebung herangeführten, voneinander getrennten Anschlussleitungen. Daraus folgt, dass die aus der Mantelfläche des unteren Zapfens austretenden Zweigleitungen in der Schließstellung in der Trennfläche zwischen den beiden Ventilgehäuseteilen positioniert sind und dass die diese Zweigleitungen unmittelbar gehäuseseitig fortführenden Leitungsabschnitte gleichfalls in der Trennebene liegen. Gleiches gilt für die zwei Anschlussleitungen, die zumindest an ihrer jeweiligen Verbindungsstelle mit diesen Leitungsabschnitten gleichfalls in die Trennebene eingreifen. Um dieses Problem der meridian durch die Trennebene getrennten Leitungsabschnitte konstruktiv zu lösen, ist vorgesehen, dass letztere und die Anschlussleitungen in einem am unteren Zapfen angeordneten Ansatzteil verlaufen.

Eine derartige Lösung ist nicht nur deshalb von Nachteil, weil sie ein zusätzliches, komplexes Ansatzteil erfordert, welches in den beiden Ventilgehäuseteilen, nach außen abgedichtet, einzubetten ist, sondern das Ansatzteil bedingt auch jeweils zwei besonders aufwändige, gewinkelte Leitungsführungen einerseits im unteren Zapfen und andererseits im Ansatzteil. Der zusätzliche Aufwand resultiert aus der Tatsache, dass die im unteren Zapfen axial verlaufenden Leckagekanäle und die in dem Ansatzteil verlaufenden Zweigleitungen jeweils an ihren Enden zwingend durch einen Stopfen zu verschließen sind.

Es ist Aufgabe der vorliegenden Erfindung, ein Scheibenventil mit Leckagesicherung der gattungsgemäßen Art zu schaffen, das eine einfache Leckageabführung aus der Ringnut im Schließglied und eine einfache Spülmöglichkeit dieser Ringnut sicherstellt und dabei gegenüber bekannten Lösungen einfacher aufgebaut ist.

### ZUSAMMENFASSUNG DER ERFINDUNG

Diese Aufgabe wird durch die Merkmale im Anspruch 1 gelöst. Vorteilhafte Ausführungsformen des Scheibenventils mit Leckagesicherung gemäß der Erfindung sind Gegenstand der Unteransprüche.

Der grundlegende erfinderische Gedanke besteht darin, dass in der relevanten Schließstellung des Scheibenventils der Austritt der Zapfenlängsbohrungen aus der Mantelfläche des ersten Lagerzapfens nicht, wie dies bei dem Scheibenventil der gattungsgemäßen Art der Fall ist, in der Trennfläche zwischen den beiden Ventilgehäuseteilen vorgesehen ist, sondern dass jeder der Verbindungswege zwischen der Zapfenlängsbohrung und dem zugeordneten Kanal, in radialer Richtung gesehen, jeweils ausgehend von der Außenseite der dazwischen liegenden Schaltdichtung, vollständig in dem zugeordneten Ventilgehäuseteil ausgebildet ist. Eine diesbezügliche Ausführungsform lässt sich in jedem Falle dann realisieren, wenn der in Frage kommende Verbindungsweg von der dem Lagerzapfen abgewandten Außenseite des Ventilgehäuseteils in letzteres eingebracht wird. Die Eintrittsstelle in die Außenseite ist dann allerdings mit einem geeigneten Stopfen form- und/oder kraft - oder stoffschlüssig zu verschließen.

Ein Verzicht auf einen diesbezüglichen Verschluss der Außenseite des zugeordneten Ventilgehäuseteils erfordert eine Positionierung und Ausrichtung des in Frage kommenden Verbindungsweges, die seine Einbringung in das Ventilgehäuseteil von der Seite des ersten Lagerzapfens aus erlaubt. Diesbezüglich sieht ein erfinderischer Lösungsgedanke vor, dass die Projektion der Außenkontur einer Querbohrung, die sich als Teil des Verbindungsweges ventilgehäuseseitig unmittelbar an die Schaltdichtung anschließt, in Richtung der Längsachse der Querbohrung und zum ersten Lagerzapfen hin und über diesen hinaus gesehen und vollzogen, nicht in die an die Mantelfläche des ersten Lagerzapfens unmittelbar angrenzende Außenkontur des zugeordneten Ventilgehäuseteils eingreift. Dies bedeutet konkret, dass jener Abschnitt des Verbindungsweges, die vorg. Querbohrung, der sich ventilgehäuseseitig unmittelbar an die Schaltdichtung anschließt und der im Regelfall als zylindrische Bohrung ausgeführt und, bezogen auf die Drehachse, vorzugsweise, aber nicht zwingend, radial orientiert ist, unter Berücksichtigung des jeweils ausgeführten Bohrungsdurchmessers so weit in Umfangsrichtung von der Trennfläche entfernt positioniert ist, dass eine Einbringung dieser Bohrung in eine Halbnut im zugeordneten Ventilgehäuseteil, von der diese Bohrung ihren Ausgang nimmt, möglich ist. Da die Bohrung im Regelfall durch ein zerspanendes Bohrwerkzeug hergestellt wird, darf der Außendurchmesser des Bohrwerkzeuges das zugeordnete Ventilgehäuseteil an keiner anderen Stelle als an der planmäßigen Bohrstelle durchdringen. Dies hat zur Konsequenz, dass das Bohrwerkzeug mit seiner die Querbohrung erzeugenden Hüllkontur auch nicht mit dem anderen Ende der Halbnut, in Umfangsrichtung gesehen, kollidieren darf. Diese Bedingung ist eine Minimalbedingung; im Regelfall wird die jeweilige Querbohrung so weit, in Umfangsrichtung der Halbnut gesehen, von der Trennfläche entfernt vorgesehen, dass ihre Herstellung problemlos möglich und eine geradlinige und unmittelbare Verbindung zum zugeordneten Kanal im Anschlussstutzen, von der Schaltdichtung aus gesehen, möglich ist.

Die beiden Zapfenlängsbohrungen lassen sich dann besonders einfach in den ersten Lagerzapfen einbringen, wenn sie parallel zu seiner Drehachse von seinem freien Ende her in diesen eingreifen und in der Symmetrieebene der Ringnut angeordnet sind.

Um den Anschluss der Zapfenlängsbohrung an das jeweilige zugeordnete Ende der Ringnut im Schließglied, die vorzugsweise symmetrisch zu einer durch die Drehachse hindurchgehenden Meridianebene des scheibenförmigen Schließgliedes angeordnet ist, möglichst einfach zu gestalten, ist weiterhin vorgesehen, dass die Längsachsen der Zapfenlängsbohrungen auch in dieser Meridianebene verlaufen.

Einfache und zuverlässige Abdichtungsverhältnisse zwischen der Schaltdichtung und dem zugeordneten Ventilgehäuseteil einerseits und dem ersten Lagerzapfen andererseits ergeben sich gemäß einem weiteren Vorschlag, wenn die Längsachse der in der Schaltdichtung ausgebildeten Verbindungsbohrung die Drehachse senkrecht schneidet und die Verbindungsbohrung vollständig von der Außenkontur des zugeordneten Ventilgehäuseteils umschrieben ist. Daraus resultiert eine, bezogen auf die Drehachse, rein radial ausgerichtete Orientierung der den Leckage- und/oder den Spülfluss in Verbindung mit der Drehstellung des ersten Lagerzapfens steuernden Verbindungsbohrung.

Eine besonders einfache Ausführung des Verbindungsweges zwischen der Zapfenlängsbohrung und dem zugeordneten Kanal sowie eine sehr günstige Anordnung des den Kanal aufnehmenden Anschlussstutzens ergeben sich dadurch, wie dies eine vorteilhafte Ausführungsform vorsieht, dass die Längsachse der Verbindungsbohrung senkrecht auf der Trennfläche steht. In diesem Falle lassen sich die beiden Anschlussstutzen, bezogen auf eine senkrechte Normallage des Scheibenventils, am unteren Ende der Ventilgehäuseteile, in einer Ebene durch die gemeinsame Längsachse der Durchtrittsöffnungen, anordnen.

Um die Strömungsverhältnisse im in Rede stehenden Verbindungsweg günstig und damit möglichst verlustarm und die diesbezügliche Steuerung betriebssicher zu gestalten, ist weiterhin vorgesehen, dass die Längsachsen und die Durchmesser der im Ventilgehäuseteil angeordneten Querbohrung und der zugeordneten Verbindungsbohrung miteinander fluchten.

Um eine einwandfrei Steuerung des Verbindungsweges zwischen Zapfenlängsbohrung und Verbindungsbohrung sicherzustellen, ist weiterhin vorgesehen, dass die jeweilige Austrittsstelle der Zapfenlängsbohrung aus der Mantelfläche in Form einer Radialbohrung ausgebildet ist, die in der Schließstellung des Schließglieds mit der Verbindungsbohrung korrespondiert. Zur Herstellung einer einwandfreien Überdeckung ist es vorteilhaft, wenn der Durchmesser der Radialbohrung geringfügig kleiner als der Durchmesser der zugeordneten Verbindungsbohrung ausgeführt ist und wenn darüber hinaus, wie dies ein weiterer Vorschlag vorsieht, die Längsachse der Radialbohrung und jene der zugeordneten Verbindungsbohrung miteinander fluchten.

Eine besonders einfache und leicht herstellbare Verbindung zwischen dem der Schaltdichtung abgewandten Ende der Radialbohrung und dem dem Schließglied abgewandten Ende der zugeordneten Zapfenlängsbohrung ist dadurch gegeben, dass in die Stirnfläche des ersten Lagerzapfens zwei Verbindungsrinnen eingreifen, von denen jede jeweils endseitig von der Mantelfläche beabstandet ist, wobei die erste Verbindungsrinne die erste Radialbohrung mit der ersten Zapfenlängsbohrung und die zweite Verbindungsrinne die zweite Radialbohrung mit der zweiten Zapfenlängsbohrung fluidgängig verbinden. Da die jeweilige Verbindungsrinne nahezu in jeder beliebigen Orientierung, bezogen auf ihre Längsrichtung, angeordnet werden kann, ergibt sich durch dieses Verbindungsmerkmal eine Vielzahl von Freiheitsgraden mit Blick auf die Positionierung und Ausrichtung der jeweiligen Radialbohrung im ersten Lagerzapfen und gegenüber dem jeweiligen Ende der zugeordneten Zapfenlängsbohrung.

Ein sicherer und einfacher Verschluss der Zapfenlängsbohrungen und der Verbindungsrinnen wird dadurch erreicht, dass die Stirnfläche des ersten Lagerzapfens mit einer Verschlussscheibe abgedeckt ist, die wenigstens das zur Stirnfläche offene jeweilige Ende der Verbindungsrinnen einschließlich der zugeordneten Zapfenlängsbohrungen fluiddicht verschließt. Als bevorzugte Verbindungstechniken kommen hier stoffschlüssige Verbindungen, wie beispielsweise durch Schweißen, Reibschweißen oder Löten, oder auch form- und kraftschlüssige Verbindungen, wie beispielweise durch abgedichtetes Einschrauben oder Einklemmen oder Einpressen, in Betracht.

Durch die erfindungsgemäße Ausbildung des Verbindungsweges zwischen der Zapfenlängsbohrung und dem zugeordneten Kanal ausschließlich im zugeordneten und vorzugsweise einstückig ausgebildeten Ventilgehäuseteil ist es möglich, den Kanal austrittsseitig, d.h. an seinem der Umgebung zugewandten Ende, wenigstens in einem Anschlussstutzen auszubilden und diesen in einfacher Weise in Richtung der Längsachse des Kanals in das zugeordnete Ventilgehäuseteil einzuschrauben. Als bevorzugte Orientierung der Längsachse ist vorgesehen, dass diese, bezogen auf die senkrechte Normallage des Scheibenventils, nach unten verläuft.

Die Erfindung sieht auch vor, den Anschlussstutzen, in dem der Kanal austrittsseitig wenigstens ausgebildet ist, nicht einzuschrauben, sondern beispielsweise stoffschlüssig mit dem zugeordneten Ventilgehäuseteil zu verbinden, wobei die Längsachse des Kanals im zugeordneten Ventilgehäuseteil parallel zur Trennfläche oder mit dem umgebungsseitigen Ende des Kanals von der Trennfläche wegstrebend und, bezogen auf die senkrechte Normallage des Scheibenventils, in beiden Fällen nach unten verlaufend orientiert ist. Die Ausbildung der Anschlussstutzen erlaubt in allen Fällen den Anschluss von Leitungen zur Zu- und Abfuhr von Spül- und Reinigungsflüssigkeit in den und aus dem von der Ringnut gebildeten Leckagehohlraum. Darüber hinaus kann über diese Leitungen auch die ggf. anfallende Leckageflüssigkeit kontrolliert und zielgerichtet abgeführt werden. Diese lässt sich, wenn kein besonderer diesbezüglicher Aufwand getrieben werden muss, auch unter Verzicht auf die vorg. Leitungen aus den Anschlussstutzen frei in die Umgebung abführen.

Höchste Leckage- und Betriebssicherheit wird gemäß einem weiteren Vorschlag dadurch erreicht, dass die Ringnut symmetrisch zu einer durch die Drehachse verlaufenden Meridianebene des Schließglieds angeordnet ist. Werden außerdem die beiden Zapfenlängsbohrungen parallel zur Drehachse und in der Symmetrieebene der Ringnut angeordnet, wie dies vorstehend bereits beschrieben wurde, dann lässt sich die Ringnut in sehr einfacher Weise dadurch an die beiden Zapfenlängsbohrungen anschließen, dass das Ende einer einerseits bis an den ersten Lagerzapfen heranreichenden ersten Ringnuthälfte der Ringnut über eine als Grundlochbohrung ausgeführte erste Anschlussbohrung fluidgängig mit der ersten Zapfenlängsbohrung und das Ende einer andererseits bis an den ersten Lagerzapfen heranreichenden zweiten Ringnuthälfte der Ringnut über eine als Grundlochbohrung ausgeführte zweite Anschlussbohrung fluidgängig mit der zweiten Zapfenlängsbohrung verbunden sind.

Die Ringnut ist in der Schließstellung des Schließglieds bei Beaufschlagung mit einer Leckageflüssigkeit leichter drainierbar und darüber hinaus in dieser Stellung überhaupt erst mit einem von außerhalb des Scheibenventils zugeführten Reinigungsmittel im Durchfluss spül- und reinigbar, wenn, wie dies eine vorteilhafte Ausführungsform vorsieht, die Enden der beiderseits bis an den zweiten Lagerzapfen heranreichenden Ringnut über eine Verbindungsbohrung fluidgängig miteinander verbunden sind.

Ein wesentliches Element zur Steuerung der Verbindung zwischen der den Leckageraum bildenden Ringnut am Umfang des Schließglieds und den beiden Zapfenlängsbohrungen von der Offen- in die Schließstellung des Scheibenventils und umgekehrt bildet die die Mantelfläche des ersten Zapfens dichtend umschließende, vorzugsweise einstückig ausgebildete Schaltdichtung, die die beiden Verbindungsbohrungen aufnimmt. Wie vorstehend bereits beispielhaft beschrieben, fluchten in der Schließstellung des Schließgliedes letztere jeweils mit der Längsachse der benachbarten Abschnitte des Verbindungsweges zwischen Zapfenlängsbohrung und dem zugeordneten Kanal, wobei es weiterhin von Vorteil ist, wenn auch die Durchmesser der im Ventilgehäuseteil angeordneten Querbohrung und der zugeordneten Verbindungsbohrung miteinander fluchten. Am anderen Ende der jeweiligen Verbindungsbohrung verbessert eine im Durchmesser etwas kleiner als die Verbindungsbohrung ausgebildete Radialbohrung die Schaltgenauigkeit und Betriebssicherheit der Leckagesteuerung durch die Schaltdichtung.

Die vorliegende Erfindung schlägt bezüglich der Ausbildung und Einbettung dieser Schaltdichtung in die beiden Ventilgehäuseteile zwei unterschiedliche, jeweils besonders vorteilhafte Ausführungsformen vor. Eine erste Ausführungsform sieht vor, dass die erste Schaltdichtung einen ringförmigen ersten Dichtungskörper mit rechteckförmigem Querschnitt aufweist, der die zwei Verbindungsbohrungen aufnimmt. Des Weiteren ist an der äußeren Mantelfläche des ersten Dichtungskörpers im Bereich der jeweiligen Verbindungsbohrung ein zylindrischer Ansatzstutzen angeformt, der von der zugeordneten Verbindungbohrung durchdrungen ist. Die erste Schaltdichtung findet im Zusammenwirken mit dem ersten Lagerzapfen unter radialer und axialer Vorspannung Aufnahme in korrespondierenden Halbnuten, von denen die eine im ersten Ventilgehäuseteil und die andere im zweiten Ventilgehäuseteil ausgebildet ist. Dabei sind der Einbauraum der ersten Schaltdichtung, begrenzt durch die beiden Halbnuten in den zugeordneten Ventilgehäuseteilen einerseits und der Mantelfläche des ersten Lagerzapfens andererseits, und die mit diesem Einbauraum korrespondierende erste Schaltdichtung so aufeinander abgestimmt, dass die notwendige axiale und radiale Vorspannung der Schaltdichtung und damit an den gebotenen Abdichtungsstellen ihre hinreichend abdichtende Einbettung sichergestellt ist.

Da der Werkstoff der Schaltdichtung zwar elastisch duktil, die begrenzte, planmäßige Verformung der Schaltdichtung zur Erzeugung einer hinreichenden Vorspannung in den Ventilgehäuseteilen und gegenüber dem ersten Lagerzapfen aber nicht zu einer unkontrollierten Verformung, beispielweise in den Bereich der Verbindungsbohrungen hinein, führen darf, werden erfindungsgemäß Ausweichräume für die Schaltdichtung geschaffen, in die diese sich planmäßig auswulsten kann. Diese Auswulstung verbessert darüber hinaus auch die Abdichtung gegenüber dem ersten Lagezapfen. Ein diesbezüglicher Vorschlag sieht vor, dass beiderseits der ersten Schaltdichtung, in Richtung der Drehachse gesehen, zwischen der Mantelfläche des ersten Lagerzapfens und den Ventilgehäuseteilen ein umlaufender Ringspalt vorgesehen ist.

Darüber hinaus ist es mit Blick auf die vorstehend angesprochene Problematik von Vorteil, wenn, wie dies ein weiterer Vorschlag vorsieht, weitere planmäßige Ausweichräume geschaffen werden, die dadurch gekennzeichnet sind, dass an der äußeren Mantelfläche des ersten Dichtungskörpers, jeweils zwischen dem ersten und dem zweiten Ansatzstutzen, eine kreisabschnittsförmige Abflachung vorgesehen ist.

Eine weitere Ausführungsform der Schaltdichtung in Gestalt einer zweiten Schaltdichtung sieht vor, dass diese einen ringförmigen zweiten Dichtungskörper mit rechteckförmigem Querschnitt aufweist, der die zwei Verbindungsbohrungen aufnimmt. Des Weiteren ist an der äußeren Mantelfläche des zweiten Dichtungskörpers, in Richtung der Drehachse gesehen und jeweils zwischen den Verbindungsbohrungen, ein vorzugsweise kreisförmiger Wulst angeformt. Diese Wulste finden Aufnahme in korrespondierenden Ausnehmungen, von denen die eine im ersten Ventilgehäuseteil und die andere im zweiten Ventilgehäuseteil ausgebildet ist. Die zweite Schaltdichtung stützt sich an ihrem dem Schließglied zugewandten Ende jeweils an einer Schulter im zugeordneten Ventilgehäuseteil ab. Eine hinreichende Dichtwirkung an den gebotenen Abdichtungsstellen wird dadurch erreicht, dass die zweite Schaltdichtung über ein an ihrem anderen Ende angreifendes Mittel zur Erzeugung axialer Druckkräfte vorgespannt ist.

Eine zweckmäßige, vorteilhafte und vor allem flexibel an unterschiedliche Betriebsbedingungen anpassbare Lösung zur Realisierung des vorgenannten Mittels zur Erzeugung axialer Druckkräfte besteht darin, dass das Mittel in Form eines von einer Druckfeder beaufschlagten Druckringes ausgebildet ist, dass die Druckfeder ihre Vorspannung in einer Haube erfährt, und dass die Haube in ein an den Ventilgehäuseteilen befestigtes, den Druckring aufnehmendes Gehäuse ein- oder aufgeschraubt ist. Dabei lässt sich die Vorspannung der Druckfeder und damit die auch jene der zweiten Schaltdichtung durch Veränderung des axialen Einbauraumes der Druckfeder in der Haube, beispielsweise durch Einlegen von Distanzscheiben, auf einfache Weise verändern.

Die erfindungsgemäßen Lösungen sind auch auf Scheibenventile anwendbar, bei denen der Dichtring nicht einstückig ausgebildet, sondern aus zwei Teilen zusammengesetzt ist, wobei die Trennfläche zwischen den beiden Dichtring-Teilen durch die Lagerzapfen-Bohrungen für die Lagerzapfen des Schließgliedes verläuft. Ein solcher geteilter Dichtring, dessen beide Hälften zweckmäßig kongruent ausgebildet sind, ist aus der DE 200 19 780 U1 bekannt, welche jedoch kein Scheibenventil mit Leckagesicherung offenbart.

Auch die erste und die zweite Schaltdichtung sind nicht zwingend einstückig auszubilden. Hier kann eine Ausführung, bestehend zweckmäßig aus zwei kongruenten Teilen, vorgesehen werden, wobei es zweckmäßig ist, die Teilungsebene nicht durch die Verbindungsbohrungen der zweiten Schaltdichtung zu führen.

### KURZBESCHREIBUNG DER ZEICHNUNGEN

Eine eingehendere Darstellung ergibt sich aus der folgenden Beschreibung und den beigefügten Figuren der Zeichnung sowie aus den Ansprüchen. Während die Erfindung in den verschiedensten Ausführungsformen realisiert ist, werden in der Zeichnung jeweils ein Ausführungsbeispiel zwei bevorzugter Ausführungsformen des vorgeschlagenen Scheibenventils mit Leckagesicherung dargestellt und nachfolgend nach Aufbau und Funktion beschrieben unter der Voraussetzung, dass diese beiden Ausführungsformen nur Beispiele für die Erfindung darstellen, nicht aber die Erfindung auf diese speziell dargestellten Beispiele beschränkt ist.

Es zeigen
- **Figur 1**: eine zweite Ausführungsform des Scheibenventil mit Leckagesicherung gemäß der Erfindung in einer Ansicht in Richtung der Längsachse seiner Durchtrittsöffnung;
- **Figur 1a**: das Scheibenventil gemäß **Figur 1** in einer, bezogen auf **Figur 1**, Seitenansicht hierzu;
- **Figur 2**: in perspektivischer Darstellung das Ventilgehäuse einer ersten Ausführungsform des Scheibenventils;
- **Figur 3**: in perspektivischer Darstellung die Einzelteile des Ventilgehäuses gemäß **Figur 2**, wobei die Einzelteile in einer sog. Explosionszeichnung aufgereiht sind;
- **Figur 4**: einen Mittelschnitt durch das Ventilgehäuse gemäß den **Figuren 2** oder **3** entsprechend einem in **Figur 1** oder der nachfolgenden **Figur 5** mit "**A-A**" gekennzeichneten Schnittverlauf;
- **Figur 5**: einen Mittelschnitt durch das Ventilgehäuse gemäß **Figur 4** entsprechend einem dort mit "**C-C**" gekennzeichneten Schnittverlauf;
- **Figur 6**: einen Schnitt durch das Ventilgehäuse gemäß **Figur 1** oder der nachfolgenden **Figur 9** entsprechend einem in **Figur 9** mit "**E-E**" gekennzeichneten Schnittverlauf im Bereich des ersten Lagerzapfens;
- **Figur 7**: in vergrößerter Darstellung eine in der Schnittdarstellung gemäß **Figur 4** mit "**Y**" gekennzeichnete Einzelheit im Bereich des Ventilgehäuses der zweiten Ausführungsform des Scheibenventils;
- **Figur 8**: in perspektivischer Darstellung eine erste Schaltdichtung, wie sie im Ventilgehäuse der zweiten Ausführungsform des Scheibenventils gemäß den **Figuren 2** bis **5** und **7** Aufnahme findet;
- **Figur 9**: einen Mittelschnitt durch das Scheibenventil in seiner ersten Ausführungsform einschließlich seines Antriebs gemäß den **Figuren 1, 1a** entsprechend einem in **Figur 1** mit "**A***-**A***" gekennzeichneten Schnittverlauf;
- **Figur 10**: einen Mittelschnitt durch Ventilgehäuse des Scheibenventils gemäß den **Figuren 1, 1a** oder **9** entsprechend einem in **Figur 1a** mit "**B-B**" gekennzeichneten Schnittverlauf;
- **Figur 11**: in vergrößerter Darstellung eine in der Schnittdarstellung gemäß **Figur 9** mit "**X**" gekennzeichnete Einzelheit im Bereich des Ventilgehäuses der ersten Ausführungsform des Scheibenventils und
- **Figur 12**: eine Geometrieskizze der möglichen Grenzlagen der beiden Verbindungswege, die jeweils zwischen der Zapfenlängsbohrung und dem zugeordneten Kanal gebildet werden.

### DETAILLIERTE BESCHREIBUNG

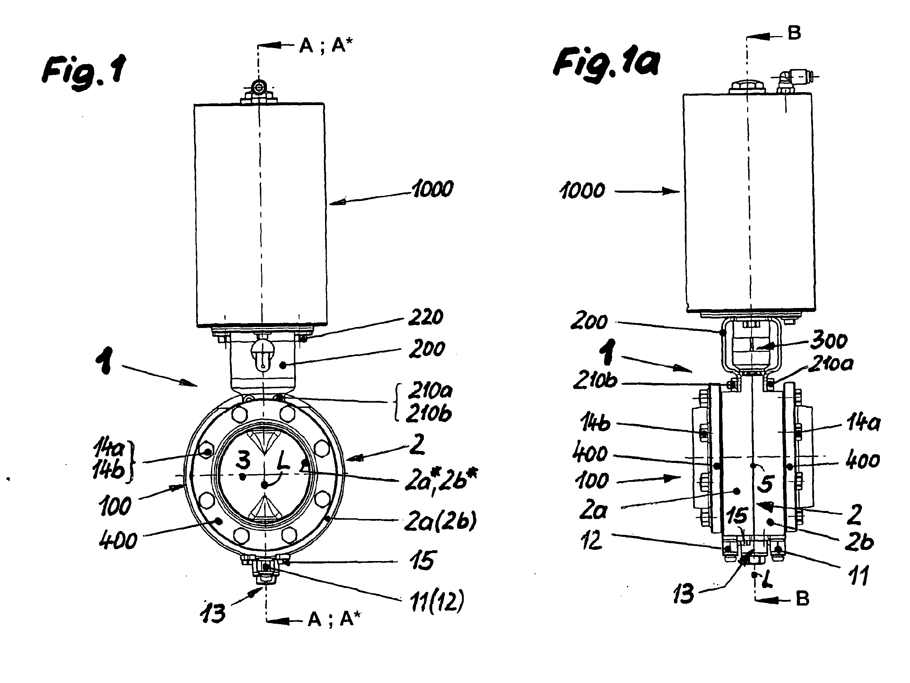

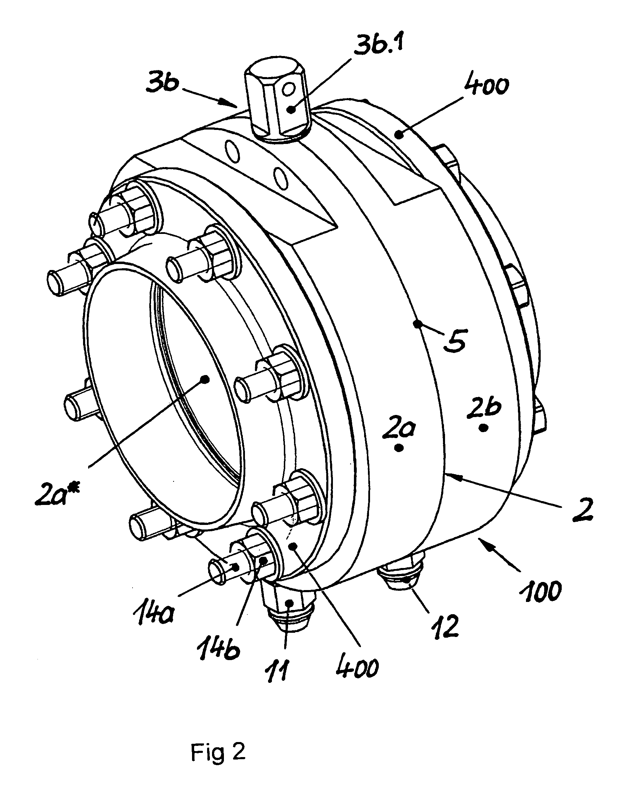

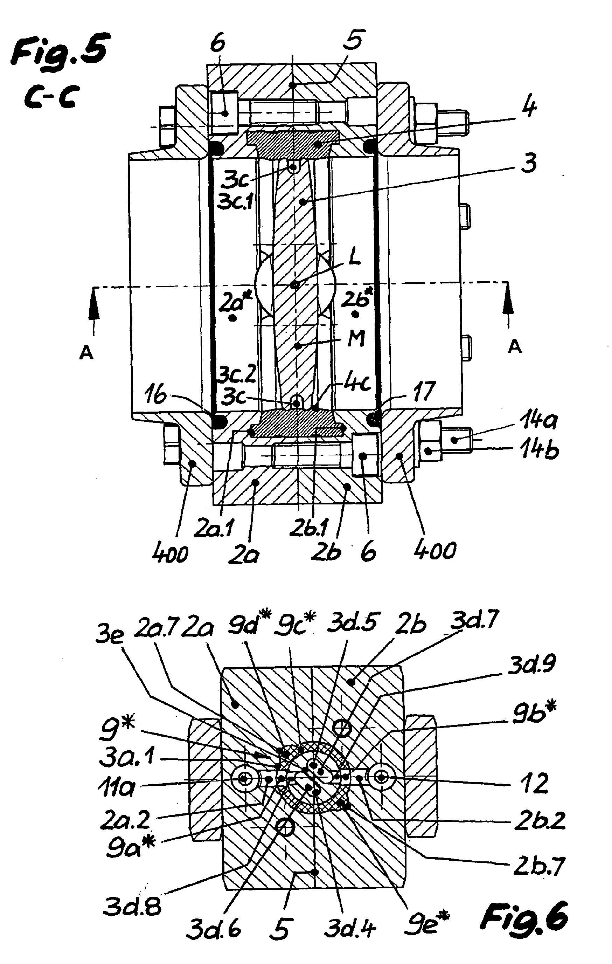

Ein Scheibenventil 1 mit Leckagesicherung in einer zweiten Ausführungsform zeigen, jeweils in einer Ansicht, die **Figuren 1** und **1a**, wobei **Figur 1** eine Ansicht offenbart, wenn der Beobachter in Richtung der Längsachse der vom Scheibenventil 1 geschalteten Durchtrittsöffnungen 2a*, 2b* blickt, und wobei **Figur 1a** die Seitenansicht des Scheibenventils 1 gemäß **Figur 1**, von links gesehen, darstellt. Das Scheibenventil 1 in seiner zweiten Ausführungsform, das in den **Figuren 6** und **9 bis 11** detaillierter dargestellt ist, unterscheidet sich von jenem in einer ersten Ausführungsform (**Figuren 2 bis 5** und **7, 8**) durch eine Schaltdichtung 9* bzw. 9, die jeweils unterschiedlich dichtend in ihre Einbauumgebung eingebettet und vorgespannt ist. Im Übrigen sind beide Ausführungsformen weitestgehend gleich, und die bestehenden Unterschiede werden weiter unten im Zusammenhang mit diesen sich unterscheidenden Schaltdichtungen 9, 9* beschrieben.

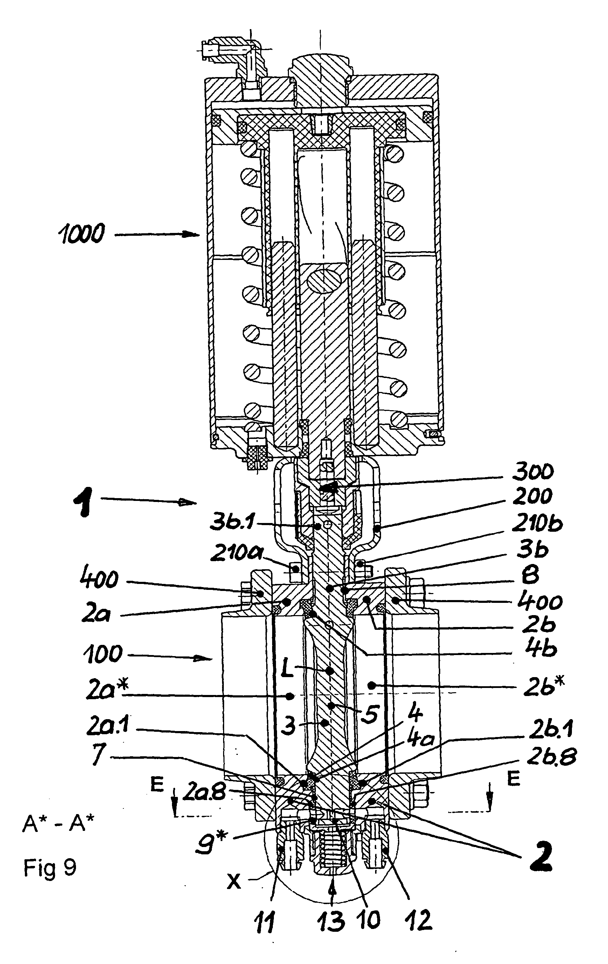

Das Scheibenventil 1 besteht aus einem Ventilkörper 100, der über ein Latemengehäuse 200 mit einem Ventilantrieb 1000 verbunden ist. Ventilkörperseitig ist die Verbindung mit dritten Verbindungsmitteln 210a, 210b, beispielsweise in Form einer lösbaren Verbindung aus zwei Durchgangsschrauben 210a mit jeweils einer Schraubmutter 210b, und antriebsseitig ist sie mit einem vierten Verbindungsmittel 220, beispielsweise in Form einer gleichfalls lösbaren Verbindung mit einer im Ventilantrieb 1000 in eine Grundlochbohrung mit Gewinde eingreifenden Kopfschraube, ausgeführt. Einzelheiten des Ventilantriebs 1000 sind zwar in **Figur 9** dargestellt, werden jedoch nachfolgend nicht weiter beschrieben, da sie zum Verständnis der Erfindung nicht von Belang sind. Im Latemengehäuse 200 ist eine Kupplung 300 vorgesehen, die eine im Bereich von ca. 90 Grad drehbare Antriebswelle des Antriebs 1000 mit einem, bezogen auf eine senkrechte Normallage des Scheibenventils 1, aus dem Ventilkörper 100 oben herausragenden, an einem scheibenförmigen Schließglied 3 angeordneten zweiten Lagerzapfen 3b, der endseitig beispielsweise in Form eines Vierkantzapfens 3b.1 ausgeführt ist (s. auch **Figuren 2** und **9**), formschlüssig drehfest verbindet.

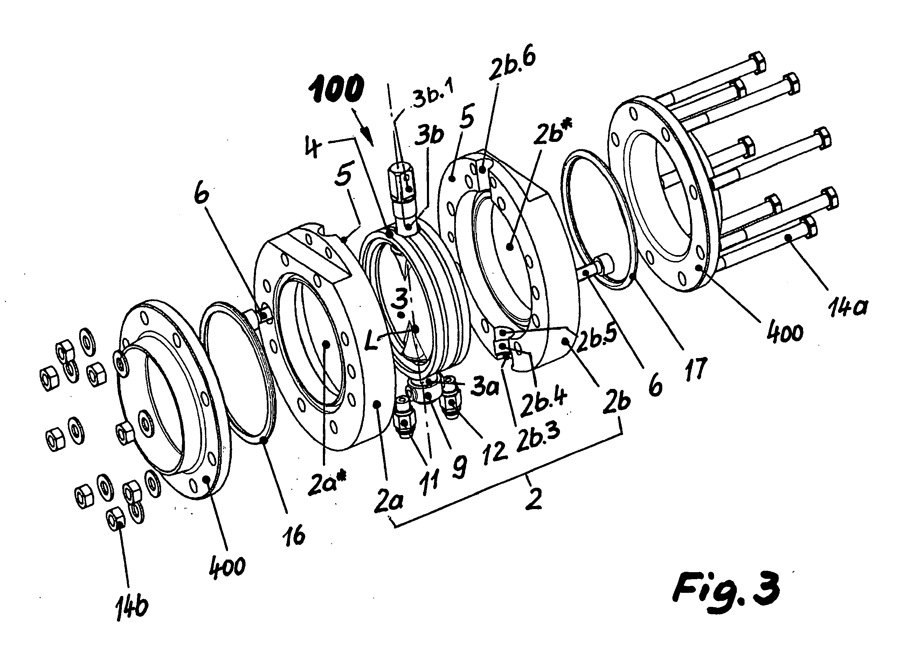

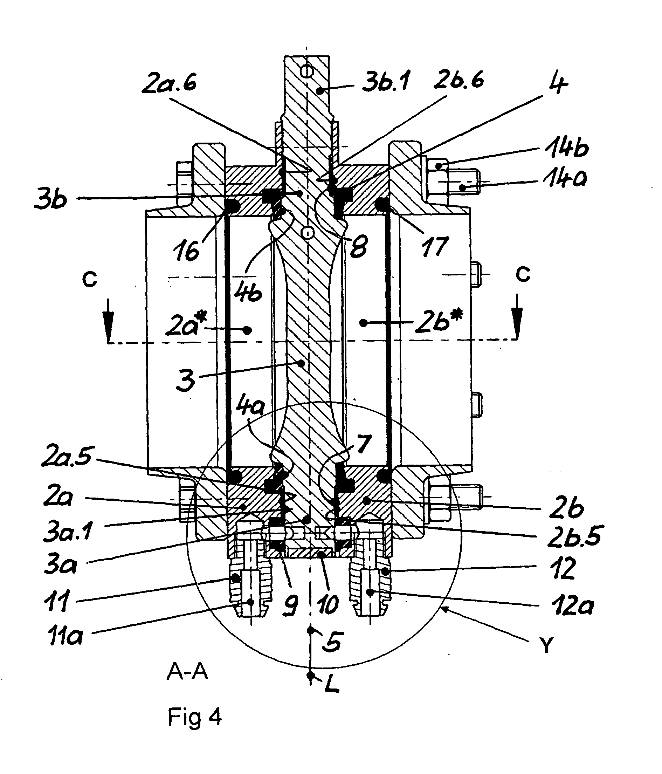

Die Verbindung eines Ventilgehäuses 2 mit in der Regel beiderseits an dieses herangeführten Rohrleitungen oder Rohrleitungsabschnitten oder -armaturen erfolgt über Ringflansche 400, von denen jeder vorzugsweise über zweite Verbindungsmittel 14a, 14b, beispielsweise in Form einer lösbaren Verbindung aus mehreren über den Umfang verteilt angeordneten, durch das Ventilgehäuse 2 insgesamt hindurchgreifenden Durchgangsschrauben 14a mit jeweils einer Schraubmutter 14b, mit einem zugeordneten Ventilgehäuseteil 2a, 2b lösbar verbunden ist (s. **Figuren 1 bis 5** und **9**). Die Abdichtung zwischen dem Ringflansch 400 und dem zugeordneten Ventilgehäuseteil 2a, 2b erfolgt mittels einer ersten und einer zweiten Flanschdichtung 16, 17 (**Figuren 3****,** **4**). Das jeweilige rohr- bzw. armaturenseitige Ende des Ringflansches 400 kann beispielsweise als Kegelstutzen mit Nutmutter oder als Gewindestutzen oder als Schweißstutzen oder als sog. Clampstutzen ausgebildet sein, wie dies beispielsweise in der Firmendruckschrift **GEA Tuchenhagen**, **VARIVENT^{®}-Scheibenventile, 008/0d-00**, für einfache Scheibenventile ohne Leckagesicherung offenbart ist.

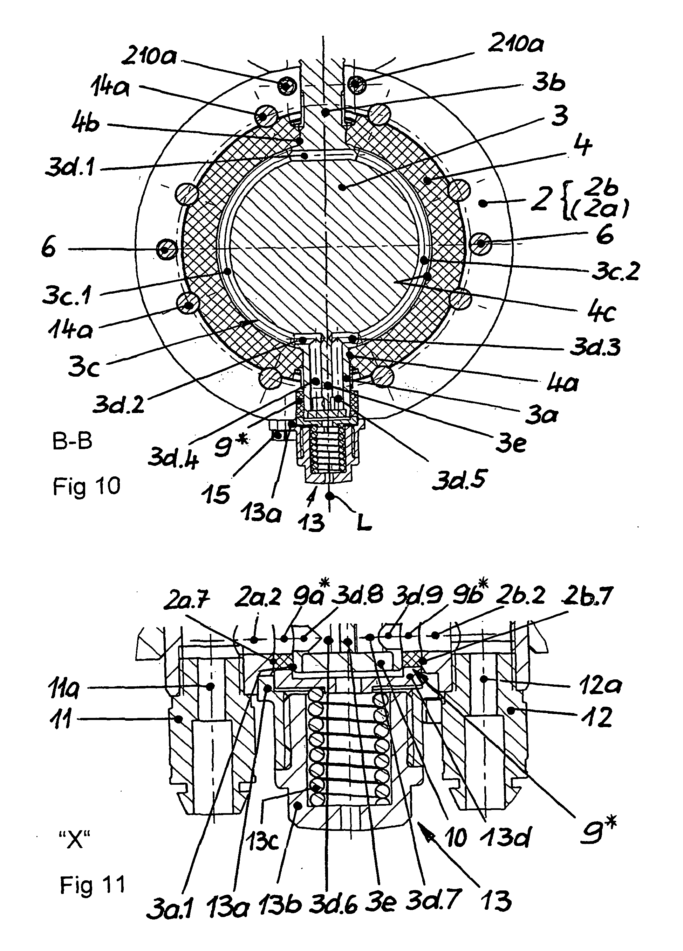

Beide Ausführungsformen des Scheibenventils 1 weisen, bezogen auf seine senkrechte Normallage, untenseits am Ventilgehäuse 2 Anschlussstutzen 11, 12 für die Ableitung von Leckageflüssigkeit in die Umgebung und zur Zu- und Ableitung von Spül- und Reinigungsflüssigkeit auf (**Figuren 1** bis **4**, **7**, **9** und **11**). Zur Erzeugung einer hinreichenden Vorspannung in der zweiten Schaltdichtung 9* im Rahmen der zweiten Ausführungsform des Scheibenventils 1 ist, im Bereich zwischen den beiden Anschlussstutzen 11, 12 und in die beiden Ventilgehäuseteile 2a, 2b eingreifend, ein Mittel 13 vorgesehen (**Figuren 1, 1a** und **9** bis **11**), das über ein Gehäuse 13a an den beiden Ventilgehäuseteilen 2a, 2b über fünfte Verbindungsmittel 15, vorzugsweise zwei Schrauben, befestigt ist (**Figuren 1,1a** und **10**).

Der Ventilkörper 100 besteht aus dem entlang einer Trennfläche 5 geteilten Ventilgehäuse 2 (**Figuren 1** bis **5**, **9**, **10**), welches den ersten Ventilgehäuseteil 2a mit der ersten Durchtrittsöffnung 2a* und den zweiten Ventilgehäuseteil 2b mit der zweiten Durchtrittsöffnung 2b* aufweist. Das scheibenförmige Schließglied 3 (**Figuren 1****,** **3****,** **10**) zum Schließen und Öffnen der Durchtrittsöffnungen 2a*, 2b*, welches um eine in dem Ventilgehäuse 2 verlaufende Drehachse L drehbar ist und zu diesem Zweck zwei im Ventilgehäuse 2 drehbar gelagerte Lagerzapfen 3a, 3b hat (**Figuren 3****,** **4****,** **9** und **10**), arbeitet mit einer auf der Innenseite eines im Wesentlichen kreisförmigen Dichtrings 4 angeordneten Ventilsitzfläche 4c zusammen (**Figuren 5****,** **10**). Dieser Dichtring 4 dichtet außerdem die Trennfläche 5 ab, wozu er zwischen den Ventilgehäuseteilen 2a, 2b in jeweils einer in diesen mit einer Hinterschneidung eingreifenden Ringnut 2a.1 bzw. 2b.1 eingespannt ist. Die form- und kraftschlüssige Verbindung der Ventilgehäuseteile 2a, 2b miteinander erfolgt mittels wechselseitig in diese eingreifende, einander gegenüberliegende, außerhalb des Dichtrings 4 angeordnete erste Verbindungsmittel 6, wobei vorzugsweise zwei vorgesehen sind, die bevorzugt als Kopfschrauben mit vollständig eingesenkten Köpfen ausgebildet sind. Die aus der ersten und der zweiten Ringnut 2a.1, 2b.1 gebildete Gesamtnut 2a.1/2b.1 ist demzufolge hammerförmig hinterschnitten, so dass dadurch ein radiales Herausreißen des Dichtrings 4 in die Durchtrittsöffnungen 2a*, 2b* hinein sicher verhindert wird.

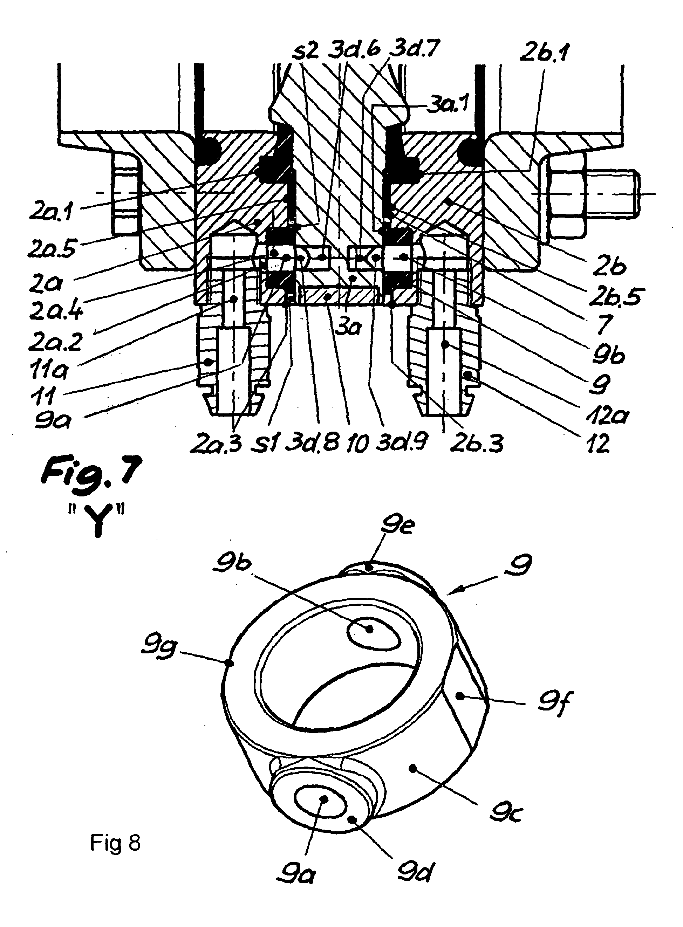

Der Dichtring 4 besitzt zwei diametral gegenüberliegende Lagerzapfen-Bohrungen 4a, 4b (**Figuren 4****,** **9** und **10**), in denen die Lagerzapfen 3a, 3b dichtend Aufnahme finden. Die Führung und Lagerung der Lagerzapfen 3a, 3b erfolgt über Lagerbuchsen 7, 8, wobei die erste Lagerbuchse 7 den ersten Lagerzapfen 3a innenseits aufnimmt und ihrerseits außenseits in einer ersten Lagerhalbbohrung 2a.5 im ersten Ventilgehäuseteil 2a und in einer zweiten Lagerhalbbohrung 2b.5 im zweiten Ventilgehäuseteil 2b Aufnahme findet. Die zweite Lagerbuchse 8 nimmt innenseits den zweiten Lagerzapfen 3b auf und findet außenseits in einer zweiten Lagerhalbbohrung 2a.6 im ersten Ventilgehäuseteil 2a und in einer zweiten Lagerhalbbohrung 2b.6 im zweiten Ventilgehäuseteil 2b Aufnahme (s. auch **Figuren 3****,** **7**).

Das Schließglied 3 weist eine an seinem Umfang angeordnete, zum Dichtring 4 offene Ringnut 3c auf (**Figuren 5****,** **10**), die bevorzugt symmetrisch zu einer durch die Drehachse L verlaufenden Meridianebene M des Schließglieds 3 angeordnet ist, sich auf zwei beiderseits der Lagerzapfen 3a, 3b erstreckende Ringnuthälften 3c.1, 3c.2 aufteilt und deren Enden bis an den zweiten Lagerzapfen 3b heranreichen und dort bevorzugt durch eine Verbindungsbohrung 3d.1 fluidgängig miteinander verbunden sind. Im Bereich des ersten Lagerzapfens 3a erfahren die Ringnuthälften 3c.1, 3c.2 eine fluiddichte Trennung durch eine sich in dem ersten Lagerzapfen 3a fortsetzende, eine Trennstelle bildende Trennwand 3e (**Figur 10**). Jede Ringnuthälfte 3c.1, 3c.2 ist im Bereich der Trennstelle mit ihrem jeweiligen Ende, das sich dort zweckmäßig zunächst in eine als Grundlochbohrung ausgebildete Anschlussbohrung 3d.2, 3d.3 verlängert, jeweils mit einer Zapfenlängsbohrung 3d.4, 3d.5 fluidgängig verbunden.

Die Zapfenlängsbohrungen 3d.4, 3d.5 verlaufen, getrennt voneinander, in dem ersten Lagerzapfen 3a, wobei sie bevorzugt parallel zur Drehachse L und vom freien Ende her in diesen eingreifen und in der Symmetrieebene der Ringnut 3c angeordnet sind. Falls die Ringnut 3c, wie dies bevorzugt vorgesehen ist, symmetrisch zur durch die Drehachse L verlaufenden Meridianebene M des Schließglieds 3 verläuft, ergeben sich sehr einfache Bedingungen zur Herstellung fluidgängiger, strömungsgünstiger Verbindungen zwischen den Ringnuthältern 3c.1, 3c.2 zum Einen und den Zapfenlängsbohrungen 3d.4, 3d.5 zum Anderen.

Unterhalb des Dichtrings 4 treten die Zapfenlängsbohrungen 3d.4, 3d.5 jeweils aus einer Mantelfläche 3a.1 des ersten Lagerzapfens 3a seitlich über eine Radialbohrung 3d.8, 3d.9 aus (**Figuren 7****,** **11**), und letztere setzen sich dort, in der Schließstellung des Schließglieds 3, jeweils in einer Verbindungsbohrung 9a, 9b (**Figur 7**) bzw. 9a*, 9b* (**Figur 11**) der die Mantelfläche 3a.1 dichtend umschließenden ringförmigen Schaltdichtung 9 (**Figur 7**) bzw. 9* (**Figur 11**) fluidgängig fort. Die Verbindungsbohrungen 9a, 9b bzw. 9a*, 9b* sind anschließend jeweils über eine erste Querbohrung 2a.2 bzw. eine zweite Querbohrung 2b.2 mit einem in dem Anschlussstutzen 11 bzw. 12 verlaufenden Kanal 11a bzw. 12a fluidgängig verbunden (**Figuren 7****,** **11**). Die Kanäle 11a, 12a münden, getrennt voneinander, in die Umgebung des Ventilgehäuses 2 aus. Die Radialbohrungen 3d.8, 3d.9 sind bevorzugt rein radial orientiert, d.h. sie stehen auch senkrecht auf der Drehachse L und haben keine axiale und/oder tangentiale Richtungskomponente. Ein diesbezüglicher Verlauf ist nicht zwingend notwendig, sondern die Radialbohrung 3d.8, 3d.9 kann auch als Querbohrung mit einer axialen und/oder tangentialen Richtungskomponente ausgeführt sein. Wesentlich ist, dass ihre jeweilige Austrittsöffnung an der Mantelfläche 3a.1 des ersten Lagerzapfens 3a in der Schließstellung des Scheibenventils 1 mit der zugeordneten Austrittsöffnung der Verbindungsbohrung 9a, 9b bzw. 9a*, 9b* zur Deckung kommt.

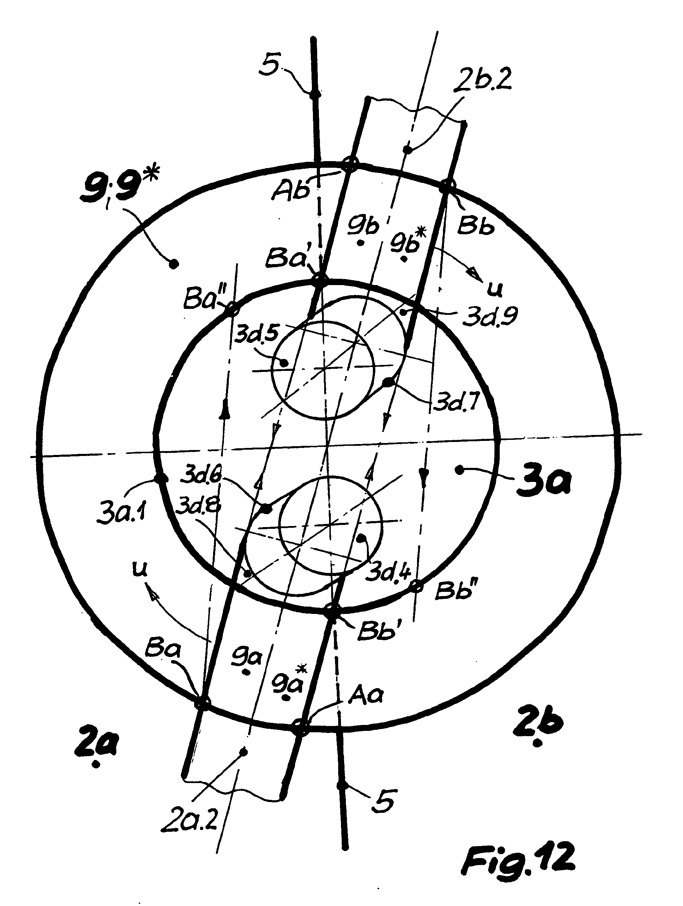

Jeder der Verbindungswege zwischen der Zapfenlängsbohrung 3d.4, 3d.5 und dem zugeordneten Kanal 11a, 12a ist, in radialer Richtung gesehen, jeweils ausgehend von der Außenseite der dazwischen liegenden Schaltdichtung 9, 9*, vollständig in dem zugeordneten Ventilgehäuseteil 2a, 2b ausgebildet. Bei den beiden Ausführungsformen des Scheibenventils 1 handelt es sich dabei um die Querbohrung 2a.2, 2b.2 (**Figuren 6****,** **7****,** **11****,** **12**). In der Geometrieskizze (**Figur 12**) ist dieses grundlegende Merkmal verdeutlicht. Die dort beispielhaft und vorzugsweise radial orientierte Querbohrung 2a.2, 2b.2 verläuft, bezogen auf die radiale Außenseite der Schaltdichtung 9, 9*, in jedem Falle vollständig in dem zugeordneten Ventilgehäuseteil 2a, 2b. Konkret mit Bezug auf **Figur 12** bedeutet dies, dass der jeweilige mit Aa bzw. Ab gekennzeichnete erste Durchdringungspunkt der Querbohrung 2a.2, 2b.2 nicht jenseits der Trennfläche 5, d.h. im Ventilgehäuseteil 2b bzw. 2a, liegen darf, während der jeweilige zweite Durchdringungspunkt Ba bzw. Bb der Querbohrung 2a.2, 2b.2 diesseits im Ventilgehäuseteil 2a bzw. 2b positioniert ist. Der sich in der Schaltdichtung 9, 9* fortsetzende Verbindungsweg, die Verbindungsbohrung 9a, 9a*, kann dabei mit einem Teil sehr wohl die Trennfläche 5 durchdringen.

Falls die radial orientierte Querbohrung 2a.2, 2b.2 noch weiter, als in **Figur 12** gezeigt, an die Trennfläche 5 herangeführt oder falls sie generell nicht radial orientiert ist, ist unter den vorg. Bedingungen prinzipiell auch eine Positionierung oder Ausrichtung möglich, bei der die jeweilige zweite Projektion dieser Querbohrung 2a.2, 2b.2 auf die andere Seite des ersten Lagerzapfens 3a die Mantelfläche 3a.1 in einem Punkt Ba" bzw. Bb" schneidet. In diesem Falle ist eine Herstellung der Querbohrung 2a.2, 2b.2, die vorzugsweise spanend erfolgt, nur von der dem ersten Lagerzapfen 3a abgewandten Seite des Ventilgehäuseteils 2a, 2b aus möglich, und die Querbohrung 2a.2, 2b.2 ist dann an ihrem der Schaltdichtung 9, 9* abgewandten Ende mit einem geeigneten Stopfen form- und/oder kraft- oder stoffschlüssig zu verschließen.

Eine Ausführung der Querbohrung 2a.2, 2b.2 ohne endseitigen Stopfen ist von der Seite der Schaltdichtung 9, 9*, d.h. von der Seite des ersten Lagerzapfens 3a aus dann möglich und stellt die bevorzugte Ausgestaltung dar, wenn die erste Projektion der Außenkontur der Querbohrung 2a.2, 2b.2 (s. **Figur 12**), in Richtung ihrer Längsachse und zum ersten Lagerzapfen hin und über diesen hinaus gesehen und ausgeführt, nicht in eine an die Mantelfläche 3a.1 unmittelbar angrenzende Außenkontur des zugeordneten Ventilgehäuseteils 2a, 2b eingreift. Konkret mit Bezug auf **Figur 12** bedeutet dies, dass die erste Projektion des Durchdringungspunktes Ba bzw. Bb, nämlich der Punkt Ba' bzw. Bb', unter den vorg. Bedingungen allenfalls im Schnittpunkt der Mantelfläche 3a.1 mit der Trennfläche 5 liegen darf, wobei ein Abstand von diesem Schnittpunkt, ein Stück weit in das Ventilgehäuseteil 2b bzw. 2a hinein und demzufolge ein Verschwenken der Querbohrung 2a.2, 2b.2 in die mit u gekennzeichnete Umfangsrichtung, in jedem Falle die Herstellung der Querbohrung 2a.2, 2b.2 sehr einfach macht.

Die Einbringung der Querbohrung 2a.2, 2b.2, von der Seite der Schaltdichtung 9, 9* aus gesehen, unter den vorstehend beschriebenen Bedingungen ist in jedem Falle dann sichergestellt, wenn die Längsachse der Verbindungsbohrung 9a, 9a* bzw. 9b, 9b* die Drehachse L senkrecht schneidet und die Verbindungsbohrung 9a, 9a* bzw. 9b, 9b* vollständig von der Außenkontur des zugeordneten Ventilgehäuseteils 2a; 2b umschrieben ist (**Figur 12****:** Lage Ba- Aa- Bb'; Bb- Ab- Ba').

Besonders einfache Bedingungen für die Einbringung der Querbohrung 2a.2, 2b.2, von der Seite der Schaltdichtung 9, 9* aus gesehen, unter den vorstehend beschriebenen Bedingungen sind insbesondere dann gegeben, wenn die Längsachse der Verbindungsbohrung 9a, 9a* bzw. 9b, 9b* senkrecht auf der Trennfläche 5 steht (**Figuren 6****,** **7****,** **11**). Unabhängig von dieser vorteilhaften, speziellen Orientierung ist vorgesehen, dass die Längsachsen und die Durchmesser der im Ventilgehäuseteil 2a, 2b angeordneten Querbohrung 2a.2, 2b.2 und der zugeordneten Verbindungsbohrung 9a, 9a* bzw. 9b, 9b* miteinander fluchten.

Die fluidgängige Verbindung der erfindungsgemäß angeordneten Querbohrung 2a.2, 2b.2 mit der zugeordneten Zapfenlängsbohrung 3d.4, 3d.5, wobei letztere jeweils bevorzugt in der Trennfläche 5 und demnach um 90 Grad gegenüber der bevorzugten Anordnungsebene der Querbohrungen 2a.2, 2b.2 positioniert sind, in der Schließstellung des Scheibenventils 1 ist unerwartet einfach zu realisieren, wenn die jeweilige Austrittsstelle der Zapfenlängsbohrung 3d.4, 3d.5 aus der Mantelfläche 3a.1 in Form der vorstehend beschriebenen Radialbohrung 3d.8, 3d.9 ausgebildet ist, die in der Schließstellung des Schließglieds 3 mit der Verbindungsbohrung 9a, 9a*; 9b, 9b* korrespondiert (**Figuren 4****,** **6****,** **7****,** **9****,** **11****,** **12**). Dabei ist es vorteilhaft, wenn die Längsachse der Radialbohrung 3d.8, 3d.9 und jene der Verbindungsbohrung 9a, 9a* bzw. 9b, 9b* miteinander fluchten.

Das entscheidende Lösungsmerkmal besteht nun darin, dass in die Stirnfläche des ersten Lagerzapfens 3a zwei Verbindungsrinnen 3d.6, 3d.7 eingreifen (**Figuren 6****,** **7**), von denen jede jeweils endseitig von der Mantelfläche 3a.1 beabstandet ist, wobei die erste Verbindungsrinne 3d.6 die erste Radialbohrung 3d.8 mit der ersten Zapfenlängsbohrung 3d.4 und die zweite Verbindungsrinne 3d.7 die zweite Radialbohrung 3d.9 mit der zweiten Zapfenlängsbohrung 3d.5 fluidgängig verbinden. Bei diesen Verbindungsrinnen 3d.6, 3d.7 handelt es sich um rinnenförmige Vertiefungen, die herstellungsbedingt zunächst zur Stimfläche hin offen sind und danach erst abgedeckt und in geeigneter Weise verschlossen werden. Der Durchtrittsquerschnitt ist, in Längsrichtung der Verbindungsrinne gesehen, vorzugsweise rechteckförmig; er kann aber auch, bedingt durch das herstellende Werkzeug, halbkreisförmig, dreiecksförmig oder trapezförmig ausgebildet sein. Jedenfalls ist mit der Verbindungsrinne 3d.6, 3d.7 eine große Variabilität hinsichtlich der Verbindung zwischen der Zapfenlängsbohrung 3d.4, 3d.5 und der zugeordneten Radialbohrung 3d.8, 3d.9 gegeben, wobei letztere in fast beliebiger Position gegenüber der zugeordneten Zapfenlängsbohrung 3d.4, 3d.5 aus der Mantelfläche 3a.1 des ersten Lagerzapfens 3a austreten kann.

Die **Figuren 4** und **7** (erste Ausführungsform) und **9** und **11** (zweite Ausführungsform) zeigen, dass die Stimfläche des ersten Lagerzapfens 3a mit einer Verschlussscheibe 10 abgedeckt ist, die wenigstens das zur Stirnfläche offene jeweilige Ende der Verbindungsrinnen 3d.6, 3d.7 einschließlich der Austrittsöffnungen der Zapfenlängsbohrungen 3d.4, 3d.5 fluiddicht verschließt.

Der Kanal 11a, 12a ist vorteilhaft austrittsseitig, d.h. an seinem der Umgebung zugewandten Ende, wenigstens teilweise in einem Anschlussstutzen 11, 12 ausgebildet, der in Richtung der Längsachse des Kanals 11a, 12a in das zugeordnete Ventilgehäuseteil 2a, 2b eingeschraubt ist (**Figuren 7****,** **11**). Eine andere Lösung sieht diesbezüglich vor, dass der Kanal 11a, 12a austrittsseitig wenigstens teilweise in einem Anschlussstutzen 11, 12 ausgebildet ist, und dass die Längsachse des Kanals 11a,12a im zugeordnete Ventilgehäuseteil 2a, 2b parallel zur Trennfläche 5 oder mit dem umgebungsseitigen Ende des Kanals 11a, 12a von der Trennfläche 5 wegstrebend und, bezogen auf die senkrechte Normallage des Scheibenventils 1, in beiden Fällen nach unten verlaufend orientiert ist. Im letztgenannten Falle handelt es sich beispielsweise um eine stoffschlüssige Verbindung zwischen dem Anschlussstutzen 11, 12 und dem zugeordneten Ventilgehäuseteil 2a, 2b.

### Besonderheiten der ersten Ausführungsform_des Scheibenventils

Aus den **Figuren 2** bis **5** und **7** und **8** sind die Merkmale der ersten Ausführungsform des Scheibenventils 1, die sich allein aus den Besonderheiten der Ausbildung und Einbettung der ersten Schaltdichtung 9 ergeben, ersichtlich.

Diese Besonderheiten bestehen darin (**Figur 8**), dass die erste Schaltdichtung 9 einen ringförmigen ersten Dichtungskörper 9c mit rechteckförmigem Querschnitt aufweist, der die zwei Verbindungsbohrungen 9a, 9b aufnimmt. An der äußeren Mantelfläche des ersten Dichtungskörpers 9c ist im Bereich der jeweiligen Verbindungsbohrung 9a, 9b ein vorzugsweise zylindrischer Ansatzstutzen 9d, 9e angeformt, der von der zugeordneten Verbindungbohrung 9a, 9b durchdrungen ist. Die erste Schaltdichtung 9 findet in korrespondierenden Halbnuten 2a.4, 2b.4, von denen die eine im ersten Ventilgehäuseteil 2a und die andere im zweiten Ventilgehäuseteil 2b ausgebildet ist, im Zusammenwirken mit dem ersten Lagerzapfen 3a unter radialer und axialer Vorspannung Aufnahme (s. hierzu auch **Figuren 3****,** **7**).

Beiderseits der ersten Schaltdichtung 9 ist, in Richtung der Drehachse L gesehen, zwischen der Mantelfläche 3a.1 des ersten Lagerzapfens 3a und einer Halbbohrung 2a.3, 2b.3 (**Figur 7**) im Ventilgehäuseteil 2a, 2b ein umlaufender Ringspalt s1, s2 vorgesehen, in den sich im Zuge des Vorspannens der ersten Schaltdichtung 9 zur Realisierung ihres planmäßigen Einbauzustandes jeweils ein überschüssiges Dichtungsvolumen auswulsten kann. Diesbezüglich ähnliche und zusätzliche Funktion hat eine kreisabschnittsförmige Abflachung 9f, 9g, die jeweils an der äußeren Mantelfläche des ersten Dichtungskörpers 9c und jeweils zwischen dem ersten und dem zweiten Ansatzstutzen 9d, 9e, vorgesehen ist.

### Besonderheiten der zweiten Ausführungsform des Scheibenventils

Aus den **Figuren 1, 1a****,** **6** und **9** bis **11** sind die Merkmale der zweiten Ausführungsform des Scheibenventils 1, die sich allein aus den Besonderheiten der Ausbildung und Einbettung der zweiten Schaltdichtung 9* ergeben, ersichtlich.

Diese Besonderheiten bestehen darin, dass die zweite Schaltdichtung 9* einen ringförmigen zweiten Dichtungskörper 9c* (**Figuren 6****,** **9** bis **11**) mit rechteckförmigem Querschnitt aufweist, der die zwei Verbindungsbohrungen 9a*, 9b* aufnimmt. An der äußeren Mantelfläche des zweiten Dichtungskörpers 9c* ist, in Richtung der Drehachse L gesehen und jeweils zwischen den Verbindungsbohrungen 9a*, 9b*, ein Wulst 9d*, 9e* angeformt, der in eine korrespondierende Ausnehmung 2a.7, 2b.7 im Ventilgehäuseteil 2a, 2b eingreift, wobei die erste Ausnehmung 2a.7 im ersten Ventilgehäuseteil 2a und die zweite 2b.7 im zweiten Ventilgehäuseteil 2b ausgebildet ist (**Figur 6**). Die zweite Schaltdichtung 9* stützt sich an ihrem dem Schließglied 3 zugewandten Ende jeweils an einer Schulter 2a.8, 2b.8 ab und sie ist über das an ihrem anderen Ende angreifende Mittel 13 zur Erzeugung axialer Druckkräfte vorgespannt (**Figur 9**).

Das Mittel 13 (**Figur 11**) ist in Form eines von einer Druckfeder 13c beaufschlagten Druckringes 13d ausgebildet. Die Druckfeder 13c erfährt ihre Vorspannung in einer Haube 13b, die in ein an den Ventilgehäuseteilen 2a, 2b befestigtes, den Druckring 13d aufnehmendes Gehäuse 13a ein- oder aufgeschraubt ist.

Aus dem oben Genannten wird verständlich, dass verschiedene Modifikationen und Varianten realisiert werden können, ohne vom Geist und dem neuen Konzept der vorliegenden Erfindung abzuweichen. Dies ist so zu verstehen, dass keine Beschränkung auf die beschriebene Ausführungsform beabsichtigt ist, welche hier dargestellt und beschrieben oder nur beschrieben worden ist. Die Offenbarung soll alle solchen Modifikationen umfassen, die sich innerhalb des von den Ansprüchen beanspruchten Schutzumfangs befinden.

### BEZUGSZEICHENLISTE DER VERWENDETEN ABKÜRZUNGEN

- 1: Scheibenventil
- 100: Ventilkörper
- 200: Latemengehäuse
- 210a, 210b: dritte Verbindungsmittel (Schraube, Mutter)
- 220: vierte Verbindungsmittel
- 300: Kupplung
- 400: Ringflansch
- 1000: Ventilantrieb

- 2: Ventilgehäuse
- 2a: erster Ventilgehäuseteil
- 2a*: erste Durchtrittsöffnung

- 2a.1: erste Ringnut
- 2a.2: erste Querbohrung
- 2a.3: erste Halbbohrung
- 2a.4: erste Halbnut
- 2a.5: erste Lagerhalbbohrung
- 2a.6: dritte Lagerhalbbohrung
- 2a.7: erste Ausnehmung
- 2a.8: erste Schulter

- 2b: zweiter Ventilgehäuseteil
- 2b*: zweite Durchtrittsöffnung

- 2b.1: zweite Ringnut
- 2b.2: zweite Querbohrung
- 2b.3: zweite Halbbohrung
- 2.b.4: zweite Halbnut
- 2b.5: zweite Lagerhalbbohrung
- 2b.6: vierte Lagerhalbbohrung
- 2b.7: zweite Ausnehmung
- 2b.8: zweite Schulter

- 3: Schließglied (scheibenförmig)
- 3a: erster Lagerzapfen (unterer)
- 3a.1: Mantelfläche (des ersten Lagerzapfens)
- 3b: zweiter Lagerzapfen (oberer)
- 3b.1: Vierkantzapfen

- 3c: Ringnut
- 3c.1: erste Ringnuthälfte
- 3c.2: zweite Ringnuthälfte

- 3d.1: Verbindungsbohrung
- 3d.2: erste Anschlussbohrung
- 3d.3: zweite Anschlussbohrung
- 3d.4: erste Zapfenlängsbohrung
- 3d.5: zweite Zapfenlängsbohrung
- 3d.6: erste Verbindungsrinne
- 3d.7: zweite Verbindungsrinne
- 3d.8: erste Radialbohrung
- 3d.9: zweite Radialbohrung

- 3e: Trennwand

- 4: Dichtring
- 4a: erste Lagerzapfen-Bohrung (untere)
- 4b: zweite Lagerzapfen-Bohrung (obere)
- 4c: Ventilsitzfläche

- 5: Trennfläche
- 6: erste Verbindungsmittel
- 7: erste Lagerbuchse (untere)

- 8: zweite Lagerbuchse (obere)

- 9: erste Schaltdichtung
- 9a: erste Verbindungsbohrung
- 9b: zweite Verbindungsbohrung
- 9c: ringförmiger erster Dichtungskörper
- 9d: erster Ansatzstutzen
- 9e: zweiter Ansatzstutzen
- 9f: erste Abflachung
- 9g: zweite Abflachung

- 9*: zweite Schaltdichtung
- 9a*: erste Verbindungsbohrung
- 9b*: zweite Verbindungsbohrung
- 9c*: ringförmiger zweiter Dichtungskörper
- 9c*: erster Wulst
- 9d*: zweiter Wulst

- 10: Verschlussscheibe

- 11: erster Anschlussstutzen
- 11a: erster Kanal

- 12: zweiter Anschlussstutzen
- 12a: zweiter Kanal

- 13: Mittel zur Erzeugung axialer Druckkräfte
- 13a: Gehäuse
- 13b: Haube
- 13c: Druckfeder
- 13d: Druckring

- 14a, 14b: zweite Verbindungsmittel
- 15: fünfte Verbindungsmittel

- 16: erste Flanschdichtung
- 17: zweite Flanschdichtung

- s1: erster Ringspalt
- s2: zweiter Ringspalt

- u: Verschwenkung in Umfangsrichtung

- Aa: erster Durchdringungspunkt der ersten Querbohrung 2a.2
- Ba: zweiter Durchdringungspunkt der ersten Querbohrung 2a.2

- Ab: erster Durchdringungspunkt der zweiten Querbohrung 2b.2
- Bb: zweiter Durchdringungspunkt der zweiten Querbohrung 2b.2

- Ba': erste Projektion von Ba
- Bb': erste Projektion von Bb

- Ba": zweite Projektion von Ba
- Bb": zweite Projektion von Bb

- L: Drehachse
- M: Meridianebene (des Schließgliedes 3)

## Patentansprüche

1. Scheibenventil (1) mit Leckagesicherung mit einem entlang einer Trennfläche (5) geteilten Ventilgehäuse (2), welches einen ersten Ventilgehäuseteil (2a) mit einer ersten Durchtrittsöffnung (2a*) und einen zweiten Ventilgehäuseteil (2b) mit einer zweiten Durchtrittsöffnung (2b*) aufweist, mit einem scheibenförmigen Schließglied (3) zum Schließen und Öffnen der Durchtrittsöffnungen (2a*, 2b*), welches um eine in dem Ventilgehäuse (2) verlaufende Drehachse (L) drehbar ist und zu diesem Zweck zwei im Ventilgehäuse (2) drehbar gelagerte Lagerzapfen (3a, 3b) hat, mit einem Dichtring (4), welcher die Trennfläche (5) abdichtet, wozu er zwischen den Ventilgehäuseteilen (2a, 2b) eingespannt ist, zwei diametral gegenüberliegende Lagerzapfen-Bohrungen (4a, 4b) aufweist, in denen die Lagerzapfen (3a, 3b) dichtend Aufnahme finden, und welcher mit einer innenseitigen Ventilsitzfläche (4c) mit dem Schließglied (3) zusammenarbeitet, mit einer am Umfang des Schließglieds (3) angeordneten, zum Dichtring (4) offenen Ringnut (3c), die im Bereich des ersten Lagerzapfens (3a) eine fluiddichte Trennung erfährt und die dort mit ihrem jeweiligen Ende jeweils mit einer Zapfenlängsbohrung (3d.4, 3d.5) fluidgängig verbunden ist, wobei die Zapfenlängsbohrungen (3d.4, 3d.5), getrennt voneinander, in dem ersten Lagerzapfen (3a) verlaufen, unterhalb des Dichtrings (4) jeweils aus der Mantelfläche (3a.1) des ersten Lagerzapfens (3a) seitlich austreten, dort, in der Schließstellung des Schließglieds (3), sich jeweils in einer Verbindungsbohrung (9a, 9b; 9a*, 9b*) einer die Mantelfläche (3a.1) dichtend umschließenden ringförmigen Schaltdichtung (9, 9*) fluidgängig fortsetzen und anschließend jeweils mit einem Kanal (11a, 12a) fluidgängig verbunden sind, wobei die Kanäle (11a, 12a), getrennt voneinander, in die Umgebung des Ventilgehäuses (2) ausmünden,
**dadurch gekennzeichnet,**
**dass** jeder der Verbindungswege zwischen der Zapfenlängsbohrung (3d.4, 3d.5) und dem zugeordneten Kanal (11a, 12a), in radialer Richtung gesehen, jeweils ausgehend von der Außenseite der dazwischen liegenden Schaltdichtung (9; 9*), vollständig in dem zugeordneten Ventilgehäuseteil (2a, 2b) ausgebildet ist.

2. Scheibenventil mit Leckagesicherung nach Anspruch 1,
**dadurch gekennzeichnet,**
**dass** die Projektion der Außenkontur einer Querbohrung (2a.2, 2b.2), die sich als Teil des Verbindungsweges ventilgehäuseseitig unmittelbar an die Schaltdichtung (9, 9*) anschließt, in Richtung der Längsachse der Querbohrung (2a.2, 2b.2) und zum ersten Lagerzapfen (3a) hin und über diesen hinaus gesehen und ausgeführt, nicht in die an die Mantelfläche (3a.1) unmittelbar angrenzende Außenkontur des zugeordneten Ventilgehäuseteils (2a, 2b) eingreift.

3. Scheibenventil mit Leckagesicherung nach einem der vorhergehenden Ansprüche,
**dadurch gekennzeichnet,**
**dass** die Zapfenlängsbohrungen (3d.4, 3d.5) parallel zur Drehachse (L) vom freien Ende des ersten Lagerzapfens (3a) her in diesen eingreifen und in der Symmetrieebene der Ringnut (3c) angeordnet sind.

4. Scheibenventil mit Leckagesicherung nach einem der vorhergehenden Ansprüche,
**dadurch gekennzeichnet,**
**dass** die Längsachsen der Zapfenlängsbohrungen (3d.4, 3d.5) in einer durch die Drehachse (L) hindurchgehenden Meridianebene (M) des scheibenförmigen Schließglieds (3) verlaufen.

5. Scheibenventil mit Leckagesicherung nach einem der vorhergehenden Ansprüche,
**dadurch gekennzeichnet,**
**dass** die Längsachse der Verbindungsbohrung (9a, 9a*, 9b, 9b*) die Drehachse (L) senkrecht schneidet, und dass die Verbindungsbohrung (9a, 9a*; 9b, 9b*) vollständig von der Außenkontur des zugeordneten Ventilgehäuseteils (2a; 2b) umschrieben ist.

6. Scheibenventil mit Leckagesicherung nach Anspruch 5,
**dadurch gekennzeichnet,**
**dass** die Längsachse der Verbindungsbohrung (9a, 9a*, 9b, 9b*) senkrecht auf der Trennfläche (5) steht.

7. Scheibenventil mit Leckagesicherung nach einem der vorhergehenden Ansprüche,
**dadurch gekennzeichnet,**
**dass** die Längsachsen und die Durchmesser der im Ventilgehäuseteil (2a; 2b) angeordneten Querbohrung (2a.2; 2b.2) und der zugeordneten Verbindungsbohrung (9a, 9a*; 9b, 9b*) miteinander fluchten.

8. Scheibenventil mit Leckagesicherung nach einem der vorhergehenden Ansprüche,
**dadurch gekennzeichnet,**
**dass** die jeweilige Austrittsstelle der Zapfenlängsbohrung (3d.4, 3d.5) aus der Mantelfläche (3a.1) in Form einer Radialbohrung (3d.8, 3d.9) ausgebildet ist, die in der Schließstellung des Schließglieds (3) mit der Verbindungsbohrung (9a, 9a*; 9b, 9b*) korrespondiert, dass in die Stirnfläche des ersten Lagerzapfens (3a) zwei Verbindungsrinnen (3d.6, 3d.7) eingreifen, von denen jede jeweils endseitig von der Mantelfläche (3a.1) beabstandet ist, wobei die erste Verbindungsrinne (3d.6) die erste Radialbohrung (3d.8) mit der ersten Zapfenlängsbohrung (3d.4) und die zweite Verbindungsrinne (3d.7) die zweite Radialbohrung (3d.9) mit der zweiten Zapfenlängsbohrung (3d.5) fluidgängig verbinden.

9. Scheibenventil mit Leckagesicherung Anspruch 8,
**dadurch gekennzeichnet,**
**dass** die Längsachse der Radialbohrung (3d.8, 3d.9) und jene der zugeordneten Verbindungsbohrung (9a, 9a*; 9b, 9b*) miteinander fluchten.

10. Scheibenventil mit Leckagesicherung nach Anspruch 8 oder 9,
**dadurch gekennzeichnet,**
**dass** die Stirnfläche des ersten Lagerzapfens (3a) mit einer Verschlussscheibe (10) abgedeckt ist, die wenigstens das zur Stirnfläche offene jeweilige Ende der Verbindungsrinnen (3d.6, 3d.7) einschließlich der zugeordneten Zapfenlängsbohrungen (3d.4, 3d.5) fluiddicht verschließt.

11. Scheibenventil mit Leckagesicherung nach einem der vorhergehenden Ansprüche,
**dadurch gekennzeichnet,**
**dass** der Kanal (11a, 12a) austrittsseitig wenigstens teilweise in einem Anschlussstutzen (11, 12) ausgebildet ist, der in Richtung der Längsachse des Kanals (11a, 12a) in das zugeordnete Ventilgehäuseteil (2a, 2b) eingeschraubt ist.

12. Scheibenventil mit Leckagesicherung nach einem der vorhergehenden Ansprüche,
**dadurch gekennzeichnet,**
**dass** der Kanal (11a, 12a) austrittsseitig wenigstens teilweise in einem Anschlussstutzen (11, 12) ausgebildet ist, und dass die Längsachse des Kanals (11 a, 12a) im zugeordnete Ventilgehäuseteil (2a, 2b) parallel zur Trennfläche (5) oder mit dem umgebungsseitigen Ende des Kanals (11a, 12a) von der Trennfläche (5) wegstrebend und, bezogen auf die senkrechte Normallage des Scheibenventils (1), in beiden Fällen nach unten verlaufend orientiert ist.

13. Scheibenventil mit Leckagesicherung nach einem der vorhergehenden Ansprüche,
**dadurch gekennzeichnet,**
**dass** die Ringnut (3c) symmetrisch zur durch die Drehachse (L) verlaufenden Meridianebene (M) des Schließglieds (3) angeordnet ist.

14. Scheibenventil mit Leckagesicherung nach einem der vorhergehenden Ansprüche,
**dadurch gekennzeichnet,**
**dass** die Enden der beiderseits bis an den zweiten Lagerzapfen (3b) heranreichenden Ringnut (3c) dort über eine Verbindungsbohrung (3d.1) fluidgängig miteinander verbunden sind.

15. Scheibenventil mit Leckagesicherung nach einem der vorhergehenden Ansprüche,
**dadurch gekennzeichnet,**
**dass** das Ende einer einerseits bis an den ersten Lagerzapfen (3a) heranreichenden ersten Ringnuthälfte (3c.1) der Ringnut (3c) über eine als Grundlochbohrung ausgeführte erste Anschlussbohrung (3d.2) fluidgängig mit der ersten Zapfenlängsbohrung (3d.4) und das Ende einer andererseits bis an den ersten Lagerzapfen (3a) heranreichenden zweiten Ringnuthälfte (3c.2) der Ringnut (3c) über eine als Grundlochbohrung ausgeführte zweite Anschlussbohrung (3d.3) fluidgängig mit der zweiten Zapfenlängsbohrung (3d.5) verbunden sind.

16. Scheibenventil mit Leckagesicherung nach einem der vorhergehenden Ansprüche,
**dadurch gekennzeichnet,**
**dass** die erste Schaltdichtung (9) einen ringförmigen ersten Dichtungskörper (9c) mit rechteckförmigem Querschnitt aufweist, der die zwei Verbindungsbohrungen (9a, 9b) aufnimmt, dass an der äußeren Mantelfläche des ersten Dichtungskörpers (9c) im Bereich der jeweiligen Verbindungsbohrung (9a, 9b) ein zylindrischer Ansatzstutzen (9d, 9e) angeformt ist, der von der zugeordneten Verbindungbohrung (9a, 9b) durchdrungen ist, und dass die erste Schaltdichtung (9) in korrespondierenden Halbnuten (2a.4, 2b.4), von denen die eine im ersten Ventilgehäuseteil (2a) und die andere im zweiten Ventilgehäuseteil (2b) ausgebildet ist, im Zusammenwirken mit dem ersten Lagerzapfen (3a) unter radialer und axialer Vorspannung Aufnahme findet.

17. Scheibenventil mit Leckagesicherung nach Anspruch 16,
**dadurch gekennzeichnet,**
**dass** beiderseits der ersten Schaltdichtung (9), in Richtung der Drehachse (L) gesehen, zwischen der Mantelfläche (3a.1) des ersten Lagerzapfens (3a) und den Ventilgehäuseteilen (2a, 2b) ein umlaufender Ringspalt (s1, s2) vorgesehen ist.

18. Scheibenventil mit Leckagesicherung nach Anspruch 16 oder 17,
**dadurch gekennzeichnet,**
**dass** an der äußeren Mantelfläche des ersten Dichtungskörpers (9c), jeweils zwischen dem ersten und dem zweiten Ansatzstutzen (9d, 9e), eine kreisabschnittsförmige Abflachung (9f, 9g) vorgesehen ist.

## Claims

1. A disk valve (1) with leak prevention, having a valve housing (2) divided along a separation plane (5) that has a first valve housing part (2a) with a first passage opening (2a*) and a second valve housing part (2b) with a second passage opening (2b*), having a disk-shaped closing member (3) for closing and opening the passage openings (2a*, 2b*) that can be rotated about an axis of rotation (L) running in the valve housing (2) and that for this purpose has two bearing pins (3a, 3b) mounted so as to rotate in the valve housing (2), having a sealing ring (4) which seals the separation plane (5) for which purpose the sealing ring is tensioned between the valve housing parts (2a, 2b), has two diametrically opposite bearing pin bore holes (4a, 4b) into which the bearing pins (3a, 3b) are received in a sealing manner, and which with an internal valve seat surface (4c) interacts with the closing member (3), having an annular groove (3c) open to the sealing ring (4) disposed at the periphery of the closing member (3), which undergoes a fluid-tight separation in the region of the first bearing pin (3a), and which in each case is connected there with the respective end thereof, in a fluid passable manner, to the pin longitudinal bore hole (3d.4, 3d.5), wherein the pin longitudinal bore holes (3d.4, 3d.5) proceed separately from each other in the first bearing pin (3a), exit beneath the sealing ring (4) laterally in each case from the lateral surface (3a.1) of the first bearing pin (3a), there in the closed position of the closing member (3) continues so as to pass fluid, in each case in a connection bore hole (9a, 9b; 9a*, 9b*) of an annular switch seal (9, 9*) enclosing the lateral surface (3a.1) in a sealed manner, and then each are connected so as to pass fluid to a channel (11 a, 12a), wherein the channels (11a, 12a) are separate from each other, opening into the surroundings of the valve housing (2),
**characterized in that**
each of the connection paths between the pin longitudinal bore hole (3d.4, 3d.5) and the channel (11a, 12a) assigned thereto, as seen in the radial direction, in each case starting from the exterior of the switch seal (9; 9*) lying in between, is designed completely in the associated valve housing part (2a, 2b).

2. The disk valve with leak prevention according to claim 1,
**characterized in that**
the projection of the outer contour of a transverse bore (2a.2, 2b.2), which connects directly to the switch seal (9, 9*) as a part of the connection path on the side of the valve housing, as seen and implemented in the direction of the longitudinal axis of the transverse bore hole (2a.2, 2b.2) toward the first bearing pin (3a) and beyond, does not engage in the outer contour of the assigned valve housing part (2a, 2b) directly adjacent to the lateral surface (3a.1).

3. The disk valve with leak prevention according to one of the preceding claims, **characterized in that**
the pin longitudinal bore holes (3d.4, 3d.5) engage parallel to the axis of rotation (L) from the free end of the first bearing pin (3a) into the latter, and are disposed in the plane of symmetry of the annular groove (3c).

4. The disk valve with leak prevention according to one of the preceding claims, **characterized in that**
the longitudinal axes of the pin longitudinal bore holes (3d.4, 3d.5) proceed in a meridian plane (M) of the disk-shaped closing member (3) passing through the axis of rotation (L).

5. The disk valve with leak prevention according to one of the preceding claims, **characterized in that**
the longitudinal axis of the connecting bore hole (9a, 9a*, 9b, 9b*) perpendicularly intersects the axis of rotation (L), and that the connecting bore hole (9a, 9a*, 9b, 9b*) is completely circumscribed by the outer contour of the assigned valve housing part (2a, 2b).

6. The disk valve with leak prevention according to claim 5, **characterized in that**
the longitudinal axis of the connecting bore hole (9a, 9a*, 9b, 9b*) is perpendicular to the separating plane (5).

7. The disk valve with leak prevention according to one of the preceding claims, **characterized in that**
the longitudinal axes and the diameters of the transverse bore hole (2a,2; 2b.2) disposed in the valve housing part (2a; 2b) and the associated connecting bore hole (9a, 9a*; 9b, 9b*) are flush with each other.

8. The disk valve with leak prevention according to one of the preceding claims, **characterized in that**
the respective outlet location of the pin longitudinal bore hole (3d.4, 3d.5) from the lateral surface (3a. 1) is designed in the shape of a radial bore hole (3d.8, 3d.9), which in the closed position of the closing member (3) corresponds to the connection bore hole (9a, 9a*; 9b, 9b*), that two connection ducts (3d.6, 3d.7) engage in the face surface of the first bearing pin (3a), each of which is offset on the end side from the lateral surface (3a.1), wherein the first connection duct (3d.6) connects the first radial bore hole (3d.8) to the first pin longitudinal bore hole (3d.4) so as to pass fluid, and the second connection duct (3d.7) connects the second radial bore (3d.9) to the second pin longitudinal bore hole (3d.5) so as to pass fluid.

9. The disk valve with leak prevention according to claim 8, **characterized in that**
the longitudinal axis of the radial bore hole (3d.8, 3d.9) and the one of the associated connecting bore hole (9a, 9a*, 9b, 9b*) are flush with each other.

10. The disk valve with leak prevention according to claim 8 or 9, **characterized in that**
the face side of the first bearing pin (3a) is covered with a closure disk (10) which closes, fluid-tight, at least the respective end of the connecting ducts (3d.6, 3d.7) open to the face side, including the assigned pin longitudinal bore holes (3d.4, 3d.7).

11. The disk valve with leak prevention according to one of the preceding claims, **characterized in that**
the channel (11a, 12a) is formed on the outlet side at least partially in a connection piece (11, 12) which is screwed into the associated valve housing part (2a, 2b) in the direction of the longitudinal axis of the channel (11 a, 12a).

12. The disk valve with leak prevention according to one of the preceding claims, **characterized in that**
the channel (11 a, 12a) is formed on the outlet side at least partially in a connection piece (11, 12), and that the longitudinal axis of the channel (11 a, 12a) diverges from the separating plane (5) in the assigned valve housing part (2a, 2b) parallel to the separating plane (5) or with the circumferential ends of the channel (11a, 12a), and in both cases proceeds downward with respect to the perpendicular normal position of the disk valve (1).

13. The disk valve with leak prevention according to one of the preceding claims, **characterized in that**
the annular groove (3c) is disposed symmetrically to the meridian plane (M) of the closing member (3) running through the axis of rotation (L).

14. The disk valve with leak prevention according to one of the preceding claims, **characterized in that**
the ends of the annular groove (3c) reaching up to the second bearing pin (3b) on both sides are connected there to each other, so as to pass fluid by means of a connection bore hole (3d.1).

15. The disk valve with leak prevention according to one of the preceding claims, **characterized in that**
the end of a first half of the annular groove (3c.1) of the annular groove (3c) reaching on one side up to the first bearing pin (3a) is connected so as to pass fluid via a first adapter bore hole (3d.2) implemented as a blind hole to the first pin longitudinal bore hole (3d.4), and the end of a second half of the annular groove (3c.2) of the annular groove (3c) reaching on the other side up to the first bearing bin (3a) is connected so as to pass fluid via a second adapter bore hole (3d.3) implemented as blind hole to the second pin longitudinal bore hole (3d.5).

16. The disk valve with leak prevention according to one of the preceding claims, **characterized in that**
he first switch seal (9) has an annular first sealing body (9c) with a rectangular cross section that receives the two connection bore holes (9a, 9b), that a cylindrical attachment connector (9d, 9e) is formed on the external lateral surface of the first sealing body (9c) in the region of the respective connection bore hole (9a, 9b) that is penetrated by the assigned connection bore hole (9a, 9b), and that the first switch seal (9) is received, interacting with the first bearing pin (3a), with radial and axial pretensioning in corresponding half grooves (2a.4, 2b.4), of which one is formed in the first valve housing part (2a) and the other is formed in the second valve housing part (2b).

17. The disk valve with leak prevention according to claim 16, **characterized in that**
on both sides of the first switch seal (9), as seen in the direction of the axis of rotation (L), a circumferential annular gap (s1, s2) is provided between the lateral surface (3a.1) of the first bearing pin (3a) and the valve housing parts (2a, 2b).

18. The disk valve with leak prevention according to claim 16 or 17, **characterized in that**
a flattening (9f, 9g), shaped as a segment of a circle is provided on the outer lateral surface of the first sealing body (9c), in each case between the first and the second attachment connectors (9d, 9e).

## Revendications

1. Soupape à disque (1) avec protection contre les fuites comprenant un carter de soupape (2) divisé le long d'une surface de séparation (5), lequel carter comporte une première partie de carter de soupape (2a) avec un premier orifice de passage (2a*) et un second carter de soupape (2b) avec un second orifice de passage (2b*), comprenant un élément de fermeture (3) en forme de disque pour fermer et ouvrir les orifices de passage (2a*, 2b*), lequel est rotatif autour d'un axe de rotation (L) s'étendant dans le carter de soupape (2) et est muni à cet effet de deux tourillons (3a, 3b) montés rotatifs dans le carter de soupape (2), comprenant une bague d'étanchéité (4) qui obture la surface de séparation (5), laquelle bague est pour cela serrée entre les parties de carter de soupape (2a, 2b), présente deux alésages de tourillons (4a, 4b) diamétralement opposés, dans lesquels les tourillons (3a, 3b) sont logés de façon étanche, et laquelle coopère, avec une surface de siège de soupape (4c) sur la face interne, avec l'élément de fermeture (3), comprenant une rainure annulaire (3c) ouverte sur la périphérie de l'élément de fermeture (3) vers la bague d'étanchéité (4), la rainure annulaire subissant une séparation étanche aux fluides dans la zone du premier tourillon (3a) et étant reliée fluidiquement avec son extrémité respective à un alésage longitudinal de tourillon (3d.4, 3d.5), les alésages longitudinaux de tourillons (3d.4, 3d.5) étant séparés l'un de l'autre, s'étendent dans le premier tourillon (3a), ressortent latéralement, en dessous de la bague d'étanchéité (4), de la surface de revêtement (3a.1) du premier tourillon (3a), et de là, dans la position de fermeture de l'élément de fermeture (3), se poursuivent fluidiquement dans un alésage de liaison (9a, 9b ; 9a*, 9b*) d'une garniture de commutation (9, 9*) annulaire entourant de manière étanche la surface de revêtement (3a.1) et sont reliés ensuite respectivement fluidiquement à un canal (11a, 12a), les canaux (11a, 12a), séparés l'un de l'autre, débouchent dans l'environnement du carter de soupape (2),
**caractérisé en ce que**
chacune des voies de liaison entre l'alésage longitudinal de tourillon (3d.4, 3d.5) et le canal associé (11a, 12a), vu dans la direction radiale, respectivement à partir de la face externe de la garniture de couplage (9; 9*) située entre les deux, est configuré entièrement dans la partie de carter de soupape associée (2a, 2b).

2. Soupape à disque avec protection contre les fuites selon la revendication 1,
**caractérisée en ce que**
la projection du profil extérieur d'un alésage transversal (2a.2, 2b.2), qui est rattaché directement en tant que partie de la voie de liaison, côté carter de soupape, à la garniture de couplage (9, 9*), ne s'engage pas dans le profil extérieur directement adjacent à la surface de revêtement (3a.1) de la partie de carter de soupape associée (2a, 2b) en direction de l'axe longitudinal de l'alésage transversal (2a.2, 2b.2) et vers le premier tourillon (3a) et vu et exécuté au-dessus de celui-ci.

3. Soupape à disque avec protection contre les fuites selon l'une des revendications précédentes,
**caractérisée en ce que**
les alésages longitudinaux de tourillons (3d.4, 3d.5) s'engagent, parallèlement à l'axe de rotation (L), depuis l'extrémité libre du premier tourillon (3a) dans celui-ci, et sont disposés dans le plan symétrique de la rainure annulaire (3c).

4. Soupape à disque avec protection contre les fuites selon l'une des revendications précédentes,
**caractérisée en ce que**
les axes longitudinaux des alésages longitudinaux de tourillons (3d.4, 3d.5) s'étendent dans un plan méridien (M) traversant l'axe de rotation (L) de l'élément de fermeture (3) en forme de disque.

5. Soupape à disque avec protection contre les fuites selon l'une des revendications précédentes,
**caractérisée en ce que**
l'axe longitudinal de l'alésage de liaison (9a, 9a*, 9b, 9b*) coupe perpendiculairement l'axe de rotation (L), et **en ce que** l'alésage de liaison (9a, 9a*; 9b, 9b^{*}) est entièrement délimité par le profil extérieur de la partie de carter de soupape associée (2a ; 2b).

6. Soupape à disque avec protection contre les fuites selon la revendication 5,
**caractérisée en ce que**
l'axe longitudinal de l'alésage de liaison (9a, 9a*, 9b, 9b*) repose perpendiculairement sur la surface de séparation (5).

7. Soupape à disque avec protection contre les fuites selon une des revendications précédentes,
**caractérisée en ce que**
les axes longitudinaux et les diamètres de l'alésage transversal (2a.2 ; 2b.2) disposé dans la partie de carter de soupape (2a ; 2b) et l'alésage de liaison associé (9a, 9a*; 9b, 9b*) sont alignés entre eux.

8. Soupape à disque avec protection contre les fuites selon une des revendications précédentes,
**caractérisée en ce que**
le point de sortie respectif de l'alésage longitudinal de tourillon (3d.4, 3d.5) depuis la surface de revêtement (3a.1) est conçu sous forme d'un alésage radial (3d.8, 3d.9) qui correspond dans la position de fermeture de l'élément de fermeture (3) à l'alésage de liaison (9a, 9a* ; 9b, 9b*), de telle sorte que deux conduits de liaison (3d.6, 3d.7) s'engagent dans la surface frontale du premier tourillon (3a), dont chacun est séparé côté extrémité de la surface de revêtement (3a.1), le premier conduit de liaison (3d.6) reliant fluidiquement le premier alésage radial (3d.8) au premier alésage longitudinal de tourillon (3d.4) et le second conduit de liaison (3d.7) reliant le second alésage radial (3d.9) au second alésage longitudinal de tourillon (3d.5).

9. Soupape à disque avec protection contre les fuites selon la revendication 8,
**caractérisée en ce que**
l'axe longitudinal de l'alésage radial (3d.8, 3d.9) et chacun des alésages de liaison associés (9a, 9a*; 9b, 9b*) sont alignés entre eux.

10. Soupape à disque avec protection contre les fuites selon la revendication 8 ou 9,
**caractérisée en ce que**
la surface frontale du premier tourillon (3a) est recouverte d'un disque de fermeture (10), qui ferme de manière étanche aux fluides au moins l'extrémité respectivement ouverte sur la surface frontale des conduits de liaison (3d.6, 3d.7), y compris des alésages longitudinaux de tourillons associés (3d.4, 3d.5).

11. Soupape à disque avec protection contre les fuites selon une des revendications précédentes,
**caractérisée en ce que**
le canal (11a, 12a) est configuré côté sortie au moins partiellement dans une tubulure de raccordement (11, 12) qui est vissée en direction de l'axe longitudinal du canal (11a, 12a) dans la partie de carter de soupape associée (2a, 2b).

12. Soupape à disque avec protection contre les fuites selon une des revendications précédentes,
**caractérisée en ce que**
le canal (11a, 12a) est configuré côté sortie au moins partiellement dans une tubulure de raccordement (11, 12), et **en ce que** l'axe longitudinal du canal (11a, 12a) dans la partie de carter de soupape associée (2a, 2b) est déporté de la surface de séparation (5) parallèlement à la surface de séparation (5) ou avec l'extrémité du canal (11a, 12a) côté milieu, et est orienté dans les deux cas vers le bas par rapport à la position normale perpendiculaire de la soupape à disque (1).

13. Soupape à disque avec protection contre les fuites selon une des revendications précédentes,
**caractérisée en ce que**
la rainure annulaire (3c) est agencée symétriquement au plan méridien (M), traversant l'axe de rotation (L), de l'élément de fermeture (3).

14. Soupape à disque avec protection contre les fuites selon une des revendications précédentes,
**caractérisée en ce que**
les extrémités de la rainure annulaire (3c) s'étendant des deux côtés jusqu'au niveau du second tourillon (3b) sont reliées ensemble fluidiquement à cet endroit par un alésage de liaison (3d.1).

15. Soupape à disque avec protection contre les fuites selon une des revendications précédentes,
**caractérisée en ce que**
l'extrémité d'une première moitié de rainure annulaire (3c.1) de la rainure annulaire (3c) s'étendant d'une part jusqu'au niveau du premier tourillon (3a) est reliée fluidiquement via un premier alésage de raccordement (3d.2) conçu comme un alésage de trou borgne au premier alésage longitudinal de tourillon (3d.4), et l'extrémité d'une seconde moitié de rainure annulaire (3c.2) de la rainure annulaire (3c) s'étendant d'autre jusqu'au niveau du premier tourillon (3a) est reliée fluidiquement via un second alésage de raccordement (3d.3) conçu comme un alésage de trou borgne au second alésage longitudinal de tourillon (3d.5).

16. Soupape à disque avec protection contre les fuites selon une des revendications précédentes,
**caractérisée en ce que**
la première garniture de couplage (9) présente un premier corps de garniture (9c) annulaire de section transversale rectangulaire, qui reçoit les deux alésages de liaison (9a, 9b), de telle sorte que sur la surface de revêtement externe du premier corps de garniture (9c) est formée dans la zone de l'alésage de liaison (9a, 9b) respectif une tubulure d'appui cylindrique (9d, 9e) qui est traversée par l'alésage de liaison (9a, 9b) associé, et **en ce que** la première garniture de couplage (9) est configurée dans des demi-rainures correspondantes (2a.4, 2b.4) dont une est conçue dans la première partie de carter de soupape (2a) et l'autre est conçue dans la seconde partie de carter de soupape (2b), et est logée de manière concourante avec le premier tourillon (3a) sous précontrainte radiale et axiale.

17. Soupape à disque avec protection contre les fuites selon la revendication 16,
**caractérisée en ce que**
des deux côtés de la première garniture de commutation (9), vu en direction de l_{'}axe de rotation (L), est prévue une fente annulaire (sl, s2) périphérique entre la surface de revêtement (3a.1) du premier tourillon (3a) et les parties de carter de soupape (2a, 2b).

18. Soupape à disque avec protection contre les fuites selon la revendication 16 ou 17,
**caractérisée en ce que**
sur la surface de revêtement extérieure du premier corps de garniture (9c), respectivement entre la première et la seconde tubulure d'appui (9d, 9e), est prévu un méplat (9f, 9g) en forme de segment circulaire.
